# EUROPÄISCHE PATENTSCHRIFT

(11) **EP 3 385 875 B1**
(45) Veröffentlichungstag und Bekanntmachung des Hinweises auf die Patenterteilung: **03.06.2020**
(21) Anmeldenummer: 18162705.0
(22) Anmeldetag: 20.03.2018
(51) Int. Cl.: G06F 21/31

(54) **VERFAHREN UND SYSTEM ZUR AUTHENTIFIZIERUNG**
METHOD AND SYSTEM FOR AUTHENTICATION
PROCÉDÉ ET SYSTÈME D'AUTHENTIFICATION

(30) Priorität: 06.04.2017 DE 102017205878
(43) Veröffentlichungstag der Anmeldung: 10.10.2018
(73) Patentinhaber: Bundesdruckerei GmbH, 10969 Berlin (DE)
(72) Erfinder: PAESCHKE, Dr. Manfred, 16348 Wandlitz (DE); SCHNJAKIN, Dr. Maxim, 10245 Berlin (DE)
(74) Vertreter: Richardt Patentanwälte PartG mbB

(56) Entgegenhaltungen:
- EP-A1- 3 147 753
- US-B1- 9 055 071
- US-B1- 9 477 823

## Beschreibung

Die Erfindung betrifft ein Verfahren und ein System zur Authentifizierung eines Nutzers mittels eines mobilen, tragbaren Kommunikationssystems.

Mobile, tragbare Kommunikationssysteme sind fest im Alltag des Menschen integriert und nicht mehr wegzudenken. Um Zugriff auf ein solches System zu erlangen, muss sich ein Nutzer üblicherweise über eine persönliche Identifikationsnummer (PIN), ein Passwort oder gegebenenfalls einen Fingerabdruck authentifizieren. Angesichts der Vielzahl an PIN-gesicherten Geräten und Anwendungen, welche Nutzer alltäglich verwenden, und der damit verbundenen Vielzahl zu merkenden PINs kommt es leicht vor, dass ein Nutzer eine PIN vergisst. Passwörter, die frei wählbar sind, werden oft so gewählt, dass sie kurz und leicht zu merken sind, was jedoch den Nachteil hat, dass sie schnell zu erraten sind und somit nur ein geringes Maß an Sicherheit bieten. Passwörter, welche ein hohes Maß an Sicherheit bieten, sind demgegenüber oft lang und komplex, was es für den Nutzer schwierig macht, sie sich zu merken. Fingerabdrucksensoren haben den Nachteil, dass der Nutzer extra einen bestimmten Finger auf diesen platzieren muss. Hält er das mobile, tragbare Kommunikationssystem in der falschen Hand, kann der Fingerabdrucksensor den Nutzer oftmals bereits nicht mehr erkennen. Ferner gibt es zahlreiche Situationen, in denen ein Fingerabdrucksensor nicht richtig funktioniert, wie etwa falls der Nutzer schmutzige oder feuchte Finger hat, ganz zu schweigen davon, wenn der Nutzer Handschuhe trägt.

Verfahren zur Nutzerauthentifizierung mittels eines Kommunikationssystems kommen überall dort zum Einsatz, wo die Identität des Nutzers überprüft wird, wobei der Identität eines registrierten Nutzers gewisse Rechte, insbesondere Zutritts- oder Zugriffsrechte, zugeordnet sind. Identität bezeichnet hier das Aufweisen von einer oder mehreren Eigenschaften, welche eine Person kennzeichnet und diese als Individuum von anderen Personen unterscheidet. Ferner bezeichnet Identität in einem weiter gefassten Sinne das Aufweisen von einer oder mehreren Eigenschaften, welche die Personen einer Gruppe gemeinsam haben und welche diese Personen als Angehörige der Gruppe von anderen Personen unterscheidet, welche nicht der Gruppe angehören. Stimmt die Identität des Nutzers mit der Identität eines registrierten Nutzers überein und besitzt dieser die notwendigen Rechte, so wird ein Signal erzeugt, welches beispielsweise eine Vorrichtung ansteuert, den Zugriff auf einen Speicherbereich frei gibt, eine Schließvorrichtung öffnet oder ähnliches. Um sich zu authentifizieren benötigt der Nutzer für einen solchen Prozess üblicherweise ein Passwort, eine PIN oder ein vergleichbares Authentifizierungsmittel. Ein Nutzer muss sich beispielsweise gegenüber einem Bankautomaten authentifizieren, indem er seine Bankkarte mit dem Automaten verbindet und seine PIN eingibt. Ist ein unberechtigter Nutzer im Besitz der Karte und kennt die PIN, so hat der unberechtigte Nutzer vollen Zugriff auf das Konto des Besitzers der Karte. Zum Erlangen eines solchen unberechtigten Zugriffs genügt es daher bereits, dass der unberechtigte Nutzer die PIN bei der Eingabe ausspäht und die Karte in seinen Besitz bringt.

Des Weiteren sind aus dem Stand der Technik Zugangskontrollen bekannt, bei denen sich ein Nutzer authentifizieren muss, um Zugriff auf eine sicherheitskritische Vorrichtung zu erlangen. Dabei muss sich der Nutzer mittels einer PIN, einem Passwort oder einer Sicherheitskarte gegenüber der Vorrichtung authentifizieren. Diese Authentifizierungsfaktoren sind aber nicht nur leicht zu entwenden oder auszuspähen, sie haben noch einen weiteren Nachteil: Sie werden einem Nutzer einmal zugewiesen und erlauben es diesem sich jederzeit ohne Einschränkungen zu authentifizieren bzw. auf ein durch die Authentifizierungsanforderung geschütztes System oder einen Dienst zuzugreifen. Es kann jedoch Situationen geben, in welcher die Notwendigkeit besteht einem registrierten Nutzer den Zugriff auf das entsprechende System bzw. den entsprechenden Dienst vorübergehend zu verwehren.

Bei bekannten Authentifizierungsverfahren für den Zugriff auf eine solche sicherheitskritische Vorrichtung wird der emotionale Zustand des Nutzers nicht berücksichtigt.

Die US 9 055 071 B1 beschreibt ein Verfahren zum Verhindern einer Übertragung sensibler oder irreführender Informationen an Orte außerhalb eines sicheren Netzwerks. Damit ein Endnutzer eines Computergeräts eine sichere Verbindung mit einem sicheren Netzwerk herstellen und auf Daten zugreifen kann, die im sicheren Netzwerk gespeichert sind, erfordert das sichere Netzwerk eine Client-Anwendung, die auf dem Computergerät ausgeführt wird. Die Client-Anwendung überwacht visuelle Hinweise, die dem Endbenutzer zugeordnet sind, erkennt basierend auf den visuellen Hinweisen verdächtige Aktivitäten, die vom Endbenutzer ausgeführt werden, und führt als Reaktion auf das Erkennen verdächtiger Aktivitäten vorbeugende Maßnahmen durch, um die Übertragung zu verhindern.

Die EP 3 147 753 A1 beschreibt ein System, welches eine haptische Challenge-Response-Funktionalität ausführt. Das System erzeugt einen oder mehrere haptische Effekte, stellt dem Benutzer über ein haptisches Ausgabegerät den einen oder die mehreren haptischen Effekte als haptische Challenge-Frage und erhält eine Antwort des Nutzers entsprechend der haptischen Challenge-Frage. Das System bestimmt dann anhand eines Modells der menschlichen Wahrnehmung, ob die Antwort einer korrekten Antwort auf die haptische Challenge-Frage entspricht. Die richtige Antwort auf die haptische Challenge-Frage wird dabei vorausgesagt, mit der vom Nutzer empfangenen Antwort verglichen und es wird bestimmt, dass der Nutzer ein Mensch ist, falls die Antwort der richtigen Antwort entspricht.

Die US 9 477 823 B1 beschreibt ein Verfahren, das von einem Authentifizierungsprozessor zum Authentifizieren eines unbekannten Benutzers ausgeführt wird, der behauptet, ein legitimer Nutzer zu sein. Das Verfahren umfasst das Vergleichen einer Antwortmetrik eines legitimen Nutzers mit einer Antwortmetrik des unbekannten Nutzers sowie entweder ein Verhindern des Zugriffs auf das Computersystem oder ein Verringern einer Zugriffslevels auf das Computersystem, falls sich die Antwortmetrik des unbekannten Nutzers um mehr als einen vordefinierten Grad an akzeptabler Variation von der Antwortmetrik des legitimen Nutzers unterscheidet. Die Antwortmetrik des legitimen Nutzers repräsentiert beobachtete Änderungen im Mikroverhalten des legitimen Nutzers als Reaktion auf das Betrachten einer Vielzahl von Hauptbildern. Die Antwortmetrik des unbekannten Nutzers repräsentiert beobachtete Änderungen im Mikroverhalten des unbekannten Nutzers als Reaktion auf das Betrachten der Vielzahl von Hauptbildern.

Der Erfindung liegt demgegenüber die Aufgabe zugrunde, ein verbessertes Verfahren zur Authentifizierung eines Nutzers zu ermöglichen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Eine Situation, in welcher die Notwendigkeit besteht einem registrierten Nutzer den Zugriff auf ein System und/oder einen Dienst vorübergehend zu verwehren, kann beispielsweise das Bedienen von sicherheitskritischen Vorrichtungen umfassen. Die sicherheitskritische Vorrichtung sollte nur von Nutzern bedient werden, die einen bestimmten emotionalen Zustand aufweisen. Ein wütender oder aufgebrachter Nutzer beispielsweise stellt insbesondere bei Flug- bzw. Fahrzeugen eine Gefahr für die Umgebung dar, da intensive emotionale Zustände das Konzentrationsvermögen und das Urteilsvermögen eines Menschen beeinträchtigen können.

Die Erfindung schlägt ein Verfahren und ein System zur Authentifikation eines Nutzers vor, welche eine Authentifizierung ohne PIN oder Passwort und unter Berücksichtigung des emotionalen Zustands des Nutzers ermöglichen. Die Grundlage der Authentifizierung ist ein individuelles intrinsisches Verhalten des Nutzers, welches durch eine natürliche Verhaltensweise des Nutzers definiert ist. Die verhaltensbasierte Authentifikation ermöglicht es dem Nutzer sich dadurch zu authentifizieren, dass er sich so verhält wie er es gewohnt ist. Der Nutzer muss sich daher kein Passwort, keine PIN, keine spezielle Geste oder ähnliche Authentifizierungsmittel merken.

Bei einer verhaltensbasierten Authentifizierung eines Nutzers wird zwischen zwei Typen von Nutzern unterschieden. Einerseits ist der in dem System registrierte Nutzer derjenige Nutzer, den das System erkennen soll. Andererseits ist der aktuelle Nutzer derjenige Nutzer, der das System aktuell bedienen bzw. benutzen möchte. Kann der aktuelle Nutzer mit dem in dem System registrierten Nutzer durch den Authentifizierungsprozess identifiziert werden, so wird dem aktuellen Nutzer der Zugriff auf das System oder Zutritt zu dem System gewährt. Stimmt der aktuelle Nutzer nicht mit dem in dem System registrierten Nutzer überein, so identifiziert das System den aktuellen Nutzer als eine andere, nicht nutzungsberechtigte Person und verweigert den Zugriff oder Zutritt. Im Folgenden wird mit "der Nutzer" der aktuelle Nutzer des Systems bezeichnet. Ist der in dem System registrierte Nutzer gemeint, ist dies explizit als "der registrierte Nutzer" gekennzeichnet.

Ein mobiles, tragbares erstes Kommunikationssystem kann ein einzelnes eigenständiges Gerät oder mehrere mechanisch und/oder kommunikativ miteinander verbundene Geräte umfassen. Ein solches mobiles, tragbares Kommunikationssystem kann zum Beispiel umfassen: ein Smartphone, ein Tablet, einen Personal Digital Assistant, einen Pager, Smart-Glasses, eine Smartwatch, ein Navigationsgerät, einen Activity Tracker, ein Gerät zur Erfassung physiologischer Daten, insbesondere physiologischer Daten wie ein Pulsmessgerät oder ein Blutdruckmessgerät. Die verhaltensbasierte Authentifizierung lässt sich von allen mobilen und tragbaren Geräten und Systemen ausführen, die in der Lage sind, elektronisch Daten zu verarbeiten und mindestens einen Sensor zur Erfassung von Daten aufweisen.

Das erste Kommunikationssystem umfasst mindestens einen Sensor zur Erfassung von Daten. Viele mobile, tragbare Kommunikationssysteme, wie Smartphones oder Smartwatches, sind mit Sensoren ausgestattet, mit welchen sich verhaltensbasierte Daten des Nutzers erfassen lassen. Drucksensoren erfassen an geeigneten Stellen, wie beispielsweise dem Handgelenk oder der Schläfe, den Puls und den Blutdruck, an einer weiteren Stelle wird beispielsweise mittels einem Gyroskop eine nutzertypische Bewegung erfasst. Die Kombination der aktuell erfassten verhaltensbasierten Daten repräsentiert dabei einerseits eine Art "digitalen Fingerabdruck", also eine Identität des Nutzers und andererseits einen aktuellen emotionalen Zustand des Nutzers.

Der emotionale Zustand eines Nutzers ist durch ein Auswerten der verhaltensbasierten Daten des Nutzers bestimmbar. Ein emotionaler Zustand umfasst eine oder mehrere Emotionen. Eine Emotion benennt ein Gefühl, eine Gemütsbewegung und seelische Erregung. Ferner ist eine Emotion ein psychophysiologisches, auch psychisches Phänomen, das durch die bewusste oder unbewusste Wahrnehmung eines Ereignisses oder einer Situation ausgelöst wird. Das Wahrnehmen geht einher mit physiologischen Veränderungen, spezifischen Kognitionen, subjektivem Gefühlserleben, reaktivem Sozialverhalten, Einflüssen auf das Verhalten oder Bewegungsmuster. Beispielsweise geht ein gestresster Nutzer schneller, als ein Nutzer, der sich in einer ruhigen Stimmung befindet. Ein nervöser Nutzer ist beispielsweise ungenauer bei der Eingabe von Text und macht dabei mehr Fehler als ein glücklicher Nutzer. Ein wütender Nutzer weist beispielsweise einen höheren Blutdruck als ein entspannter Nutzer auf. Der emotionale Zustand ist dabei bezüglich einer Mehrzahl von Parametern individuell. Beispielsweise können der Ruhepuls und der Blutdruck eines jeden Menschen unterschiedlich sein.

Das erste Kommunikationssystem umfasst ferner ein Klassifikationsmodul und einen Prozessor, wobei das Klassifikationsmodul von dem Prozessor ausgeführt wird.
Das Klassifikationsmodul ist dazu konfiguriert, Daten, die in das Klassifikationsmodul eingegeben wurden, in Klassen einzuteilen und den Daten entsprechende Klassifikationen zuzuordnen. Das Klassifikationsmodul ist dazu konfiguriert, die Daten einer Identität eines registrierten Nutzers zuzuordnen oder den Nutzer als einen nicht registrierten Nutzer zu identifizieren. Ferner ist das Klassifikationsmodul dazu konfiguriert, den Daten einen emotionalen Zustand aus einer Auswahl von für die Authentifizierung zulässigen emotionalen Zuständen zuzuordnen.

In Ausführungsformen kann für eine erfolgreiche Authentifizierung ein achtsamer, gelassener oder ausgeglichener Zustand erfordert sein. Ferner kann eine erfolgreiche Authentifizierung einen emotionalen Zustand erfordern, der einem bestimmten auszuschließenden Zustand nicht entspricht. Solche Zustände können beispielsweise wütend, verwirrt, traurig, depressiv, nervös oder ängstlich umfassen.

Das Verfahren zur Authentifizierung eines Nutzers umfasst:
- Empfangen einer Authentifizierungsanfrage,
- Erfassen der Daten durch den mindestens einen Sensor,
- Eingeben der Daten in das Klassifikationsmodul und Generieren eines ersten Zwischenergebnisses und eines zweiten Zwischenergebnisses aus den Daten durch das Klassifikationsmodul,
- Generieren eines Klassifikationsergebnisses unter Verwendung des ersten Zwischenergebnisses und des zweiten Zwischenergebnisses,
- Authentifizieren des Nutzers unter Verwendung des Klassifikationsergebnisses,
- Generieren eines Authentifizierungssignals, wobei das Signal eine Information über das Ergebnis der Authentifizierung umfasst.

Die Daten werden durch den mindestens einen Sensor des ersten Kommunikationssystems erfasst und in das Klassifikationsmodul eingegeben. Das Klassifikationsmodul verarbeitet die Daten zu einem ersten Zwischenergebnis und einem zweiten Zwischenergebnis.

In Ausführungsformen implementiert das Klassifikationsmodul ein Maschinenlernverfahren. Ein Maschinenlernverfahren bezeichnet ein Verfahren, mit dem das Klassifikationsmodul in der Lage ist, sich an das Verhalten des Nutzers des ersten Kommunikationssystems anzupassen. Dieses Anpassen wird trainieren des Klassifikationsmoduls genannt. Trainieren bezeichnet in diesem Sinne das Justieren und gegebenenfalls Neukonfigurieren von Vergleichsparametern, anhand derer der Nutzer korrekt identifiziert und der emotionale Zustand korrekt erkannt werden können.

Das Maschinenlernverfahren ist nicht beschränkt auf einen bestimmten Algorithmus. Gemäß Ausführungsformen der Erfindung ist das Maschinenlernverfahren ein speziell für das maschinelle Lernen entwickelter Algorithmus, wie zum Beispiel, ohne darauf beschränkt zu sein, ein Random-Forrest-Algorithmus, ein Neuronales Netz, eine Support-Vektor-Maschine, ein Naive-Bayes-Klassifikator oder eine Rückkopplung ähnlich der Rückkopplung eines linearen oder nichtlinearen Reglers.

Das erste Zwischenergebnis umfasst eine Zuordnung des Nutzers zu einer Identität eines registrierten Nutzers und die Angabe einer Zuordnungswahrscheinlichkeit, mit der dem Nutzer die Identität des registrierten Nutzers zugeordnet wird. Das zweite Zwischenergebnis umfasst eine Zuordnung des Nutzers zu einem emotionalen Zustand und die Angabe einer Zuordnungswahrscheinlichkeit, mit der dem Nutzer der emotionale Zustand zugeordnet wird.

Die Zuordnung einer Klassifikation wird beispielsweise wird beispielsweise anhand der Zuordnungswahrscheinlichkeit bestimmt. Die Klassifikation mit der höchsten Zuordnungswahrscheinlichkeit wird als die den Daten bzw. dem Nutzer zugeordnete Klassifikation bestimmt. Beispielsweise wird für den Nutzer ein erster emotionaler Zustand mit einer Zuordnungswahrscheinlichkeit von 45% und zweiter emotionaler Zustand mit einer Zuordnungswahrscheinlichkeit von 54% ermittelt. Das übrige Prozent teilt sich auf weitere emotionale Zustände auf. Da der zweite emotionale Zustand eine höhere Zuordnungswahrscheinlichkeit aufweist als der erste emotionale Zustand, würde dem Nutzer der zweite emotionale Zustand zugeordnet werden.

Aus dem ersten Zwischenergebnis und dem zweiten Zwischenergebnis wird das Klassifikationsergebnis generiert. Das Klassifikationsergebnis umfasst die Informationen bezüglich der vorher getätigten Zuordnungen und deren Zuordnungswahrscheinlichkeiten. Der Nutzer wird anhand des Klassifikationsergebnisses authentifiziert. Dazu müssen dem Nutzer eine Identität eines registrierten Nutzers und ein für die Authentifizierung zulässiger emotionaler Zustand zugeordnet sein. Ist eines dieser beiden Kriterien nicht erfüllt, wird der Nutzer nicht erfolgreich authentifiziert. Beispielsweise wurde der Nutzer als ein registrierter Nutzer identifiziert, befindet sich jedoch in einem unzulässigen emotionalen Zustand, beispielsweise weil er wütend ist.

In einer weiteren ausführungsform müssen für eine erfolgreiche Authentifizierung weitere Kriterien erfüllt sein. Beispielsweise erfordert ein weiteres Kriterium einen Mindestwert für eine oder beide der Zuordnungswahrscheinlichkeiten. In einer weiteren Ausführungsform sind die Zwischenergebnisse mit einem Zeitstempel versehen. Ein weiteres Kriterium kann beispielsweise ein maximales Höchstalter der Zwischenergebnisse umfassen.

Auf jede Authentifizierungsanfrage wird eine Authentifizierung mit einem Klassifikationsergebnis durchgeführt. Anschließend wird ein Authentifizierungssignal generiert, welches Informationen über das Ergebnis der Authentifizierung umfasst. In einer Ausführungsform wird ein Authentifizierungssignal nur dann erzeugt, wenn die Authentifizierung erfolgreich war. Beispielsweise kann das Authentifizierungssignal eine Vorrichtung ansteuern oder einen Prozess starten. In einer weiteren Ausführungsform wird ein Authentifizierungssignal nur dann erzeugt, wenn die Authentifizierung nicht erfolgreich war. Beispielsweise ist eine Zugangskontrolle für alle Nutzer geöffnet so lange sich die Nutzer authentifizieren können. Die Zugangskontrolle wird erst dann verschlossen, wenn einer der Nutzer sich nicht authentifizieren kann.

In einer weiteren Ausführungsform der Erfindung wird das Klassifikationsergebnis, welches letztendlich aus dem ersten und zweiten Zwischenergebnis generiert wird, zu einem resultierenden Konfidenzwert zusammengefasst. Das Zusammenfassen kann beispielsweise, aber nicht zwangsweise, die Bildung eines Mittelwerts, eines Medians oder eines Modalwerts umfassen.

Durch die Bildung eines resultierenden Konfidenzwertes und der Verwendung des ersten und zweiten Zwischenergebnisses ergibt sich in vorteilhafter Weise, dass nur ein einziger Zahlenwert nötig ist, um den Nutzer zu authentifizieren. Es werden keine Details bezüglich der Anwendungsnutzung, der verwendeten Parameter oder der Person des Nutzers, versendet, um den Nutzer zu authentifizieren. Dies schützt insbesondere die Datensicherheit bzw. die Anonymität des Nutzers, da aus dem resultierenden Konfidenzwert nicht mehr nachvollziehbar ist, aus welchen Klassifikationsparametern sich dieser im Detail zusammensetzt, welche Werte die Klassifikationsparameter jeweils aufweisen und welchen emotionalen Zustand der Nutzer innehat.

In einer Ausführungsform sendet ein Programm, welches von dem ersten Kommunikationssystem umfasst wird, eine Authentifizierungsanfrage an das Betriebssystem des ersten Kommunikationssystems und/oder ein für die Authentifizierung konfiguriertes Anwendungsprogramm, welches auf dem ersten Kommunikationssystem implementiert ist. Eine Anwendung kann beispielsweise ein Anwendungsprogramm bzw. eine Applikation umfassen, welche auf dem ersten Kommunikationssystem implementiert ist und/oder über das erste Kommunikationssystem gesteuert wird. Unter einem Anwendungsprogramm wird hier ohne Einschränkung jede Art von Computerprogramm verstanden, welches maschinenlesbare Instruktionen zur Steuerung einer Funktionalität eines Computers umfasst. Eine solches Anwendungsprogramm kann beispielsweise dazu konfiguriert sein eine nützliche oder gewünschte, nicht systemtechnische Funktionalität zu bearbeiten oder zu unterstützen.

Sendet ein Programm die Authentifizierungsanfrage, so ergibt sich in vorteilhafter Weise, dass beliebige Programme das Verfahren zur Authentifizierung nutzen können. Insbesondere Programme, die eine hohe Datensicherheit bedürfen oder Programme die mit sensiblen Daten des Nutzers arbeiten können so vor ungewolltem Zugriff geschützt werden. Ein Fluglotse, der emotional unausgeglichen, beispielsweise erregt und wütend ist, kann sich beispielsweise an seinem Arbeitsplatz, welcher das Verfahren der Authentifizierung unterstützt, nicht einloggen, um zu verhindern, dass sein emotionaler Zustand seine Arbeit und damit die Sicherheit des Flugverkehrs beeinflusst.

In einer Ausführungsform ist das erste Kommunikationssystem mit einem zweiten Kommunikationssystem kommunikativ verbunden, wobei das zweite Kommunikationssystem die Authentifizierungsanfrage sendet, um den Nutzer gegenüber dem zweiten Kommunikationssystem zu authentifizieren, wobei das zweite Kommunikationssystem in Abhängigkeit von dem Authentifizierungssignal angesteuert wird.

Das erste Kommunikationssystem umfasst ferner eine erste Schnittstelle, um mit dem zweiten Kommunikationssystem zu kommunizieren. Das zweite Kommunikationssystem umfasst eine zweite Schnittstelle, um mit dem ersten Kommunikationssystem zu kommunizieren.

Das zweite Kommunikationssystem kann als Computer, als Server, als Rechenzentrum oder als geeignete Anlage zur Datenverarbeitung ausgebildet sein. Über eine dritte Schnittstelle ist das zweite Kommunikationssystem beispielsweise mit einer Vorrichtung kommunikativ verbunden. Die Vorrichtung kann als Schließmechanismus, als Fahrzeug, als Aufbewahrungsmittel oder als Vorrichtung, die einer Authentifizierung bedarf, ausgebildet sein.

In einer Ausführungsform ist das zweite Kommunikationssystem als Steuereinheit einer Tür ausgebildet. Die Tür wird durch die Steuereinheit nur dann angesteuert, wenn sich ein Nutzer erfolgreich authentifiziert hat. In einer weiteren Ausführungsform umfasst das zweite Kommunikationssystem eine Kontrollsteuerung eines Flugzeuges, eines Busses oder eines Zuges. Das Flugzeug bzw. das Fahrzeug lässt sich nur dann starten, wenn eine flugberechtigte Person sich gegenüber dem Flugzeug erfolgreich authentifizieren konnte. Informationen über die berechtigten Personen sind dabei in einem Speicher des Flugzeugs gespeichert.

In einer weiteren Ausführungsform tauschen das erste und das zweite Kommunikationssystem Identifikationsdaten untereinander aus, um die Effizienz der Kommunikation zu steigern bzw. um die Geschwindigkeit der Datenverarbeitung zu steigern. Identifikationsdaten des ersten Kommunikationssystems ermöglichen beispielsweise eine Identifikation des ersten Kommunikationssystems und damit eine Zuordnung des ersten Kommunikationssystems zu einem registrierten Nutzer. Aus den Identifikationsdaten kann das zweite Kommunikationssystem somit ableiten, für welchen Nutzer das erste Zwischenergebnis der verhaltensbasierten Authentifizierung von dem ersten Kommunikationssystem bereitgestellt wird oder werden sollte.

In einer Ausführungsform werden das erste Zwischenergebnis und das zweite Zwischenergebnis an das zweite Kommunikationssystem gesendet, wobei das zweite Kommunikationssystem Daten des Nutzers erfasst und aus den durch das zweite Kommunikationssystem erfassten Daten ein drittes Zwischenergebnis generiert, wobei das zweite Kommunikationssystem das Klassifikationsergebnis generiert, wobei für die Generierung des Klassifikationsergebnisses ferner das dritte Zwischenergebnis verwendet wird.

Durch das Verwenden zweier Kommunikationssysteme ergibt sich in vorteilhafter Weise eine Erhöhung der Sicherheit für das Verfahren. Das erste Kommunikationssystem wird in der Regel von dem Nutzer mitgeführt. Da sich der Nutzer gegenüber dem zweiten Kommunikationssystem über sein Verhalten authentifiziert, existieren keine Passwörter oder PINs, welche ein Spion ausspähen könnte. Das zweite Kommunikationssystem ist dadurch geschützt, dass es in der Regel durch seine Unbeweglichkeit mittels höheren Sicherheitsmaßnahmen geschützt ist. Beispielsweise könnte Wachpersonal und/oder ein Kamerasystem das zweite Kommunikationssystem vor einer Manipulation schützen. Das zweite Kommunikationssystem stellt durch eine gegenüber dem ersten Kommunikationssystem eigenständige Sensorik und sein eigenes Klassifikationsmodul ferner eine von dem ersten Kommunikationssystem unabhängige Prüfinstanz dar.

Durch das Auswerten der durch das erste und/oder zweite Kommunikationssystem erfassten Daten durch das zweite Kommunikationssystem ergibt sich in vorteilhafter Weise eine erhöhte Sicherheit des Authentifikationsverfahrens. Da das erste Kommunikationssystem ständig von dem Nutzer mitgeführt wird, ist das erste Kommunikationssystem einem erhöhten Risiko der Manipulation, insbesondere der Manipulation der Datenverarbeitung des Klassifikationsmoduls, ausgesetzt. Das zweite Kommunikationssystem hingegen kann einen erhöhten Schutz gegenüber der Manipulation aufweisen, da es nicht mobil und nicht tragbar ausgebildet sein muss. Dadurch ist das zweite Kommunikationssystem leichter zu schützen oder zu überwachen, zum Beispiel durch eine Überwachungsanlage oder Wachpersonal.

Das zweite Kommunikationssystem umfasst nach einer Ausführungsform ein Sicherheitsmodul, über welches das erste Kommunikationssystem mit dem zweiten Kommunikationssystem kommuniziert. Die Kommunikation über das Sicherheitsmodul ist eine kryptographisch gesicherte Kommunikation, wobei die dafür notwendigen Daten in einem kryptographisch geschützten Speicherbereich des Sicherheitsmoduls gespeichert sein können.

Die Sicherheit des Authentifikationsverfahrens ist deshalb erhöht, da die Manipulation der Datenverarbeitung des zweiten Kommunikationssystems schwieriger ist als die Manipulation der Datenverarbeitung des ersten Kommunikationssystems.

Die erste Schnittstelle, die zweite Schnittstelle und/oder die dritte Schnittstelle umfassen eine Drahtloskommunikationsschnittstelle. Das erste Kommunikationssystem und das zweite Kommunikationssystem sind mittels der ersten und zweiten Schnittstelle in der Lage über eine Drahtloskommunikation, wie zum Beispiel Radiofrequenzidentifikation (RFID), Nahfeldkommunikation (NFC), WLAN, Bluetooth oder Funk, miteinander zu kommunizieren. Die dritte Schnittstelle kann ferner als eine nicht drahtlose Schnittstelle ausgebildet sein. Die dritte Schnittstelle kann neben den oben genannten Drahtloskommunikationsvarianten beispielsweise eine Schnittstelle für ein Kabel oder eine Leiterbahn umfassen. Ist das zweite Kommunikationssystem in der Vorrichtung integriert oder umgekehrt, so kann eine Leiterbahn besonders vorteilhaft sein, da sie platzsparend und weniger fehleranfällig als ein Kabel ist.

In einer weiteren Ausführungsform der Erfindung umfasst das Generieren des Klassifikationsergebnisses ein Bilden eines Mittelwertes aus dem ersten Zwischenergebnis, dem zweiten Zwischenergebnis und dem dritten Zwischenergebnis.

Durch das Bilden eines Mittelwertes aus dem ersten Zwischenergebnis und dem zweiten Zwischenergebnis vereinfacht sich die Datenverarbeitung, welche das Generieren des Klassifikationsergebnisses umfasst.

In einer weiteren Ausführungsform sind bei der Bildung des Mittelwerts die Zwischenergebnisse jeweils mit einem Gewichtungsfaktor versehen.

Durch das Versehen des ersten Zwischenergebnisses, des zweiten Zwischenergebnisses und des dritten Zwischenergebnisses mit einem Gewichtungsfaktor ergibt sich in vorteilhafter Weise eine erhöhte Sicherheit des Authentifikationsverfahrens. Durch die Gewichtung kann das erste Zwischenergebnis und das zweite Zwischenergebnis an die Sicherheitsbestimmungen der entsprechenden Ausführungsform angepasst werden. Ist beispielsweise das zweite Kommunikationssystem durch ein Kamerasystem gesichert, wird vom Wachpersonal geschützt und/oder befindet sich auf gesichertem Gelände kann dem zweiten Zwischenergebnis ein höheres Gewicht zugewiesen werden, da dem zweiten Kommunikationssystem eine höhere Sicherheit zugeordnet ist als dem ersten Kommunikationssystem.

In einer weiteren Ausführungsform kommunizieren das erste Kommunikationssystem und das zweite Kommunikationssystem über eine kryptografisch gesicherte Drahtlosverbindung. Die kryptografische Sicherung kann das Verwenden eines asymmetrischen Verschlüsselungsverfahrens, eines symmetrischen Verschlüsselungsverfahrens, eines hybriden Verschlüsselungsverfahrens und/oder das Austauschen von Zertifikaten umfassen.

Durch das Verwenden einer kryptografisch gesicherten Drahtlosverbindung ergibt sich in vorteilhafter Weise eine erhöhte Sicherheit des gesamten Authentifizierungsverfahrens.

In einer weiteren Ausführungsform umfasst das Verfahren das Senden eines Authentifizierungssignals an das erste Kommunikationssystem durch das zweite Kommunikationssystem aufgrund einer erfolgreichen oder nicht erfolgreichen Authentifizierung.

Ist die Authentifizierung nicht erfolgreich wird nach Ausführungsformen der Grund des Misserfolges ermittelt. Liegt eine fehlerhafte Authentifizierung vor, beispielsweise aufgrund einer abgebrochenen Kommunikationsverbindung zwischen dem ersten und zweiten Kommunikationssystem, so versucht das zweite Kommunikationssystem das Problem zu beheben, zum Beispiel indem es die Verbindung wiederherstellt. Ist der Misserfolg allerdings darauf zurückzuführen, dass das Klassifikationsergebnis das Prüfungsergebnis nicht erfüllt hat, zum Beispiel weil eine unberechtigte Person versucht hat sich zu authentifizieren, so kann das Wachpersonal verständigt, ein Alarm ausgelöst und/oder das zweite Kommunikationssystem gesperrt werden.

In einer weiteren Ausführungsform weist das erste Kommunikationssystem ferner einen internen Speicher auf, wobei das Erfassen der Daten, das Eingeben der Daten in das Klassifikationsmodul und das Generieren des ersten und zweiten Zwischenergebnisses wiederholt ausgeführt werden, wobei das erste und das zweite Zwischenergebnis in dem Speicher des ersten Kommunikationssystems gespeichert werden, wobei auf das Empfangen der Authentifizierungsanfrage hin das erste und das zweite Zwischenergebnis aus dem Speicher des Kommunikationssystems ausgelesen werden.

Durch das wiederholte Erfassen der Daten ergibt sich vorteilhafterweise eine maximal sensible Einteilung der ersten und zweiten Zwischenergebnisse pro Zeiteinheit. Es werden kontinuierlich Daten erfasst, welche kontinuierlich zu ersten und zweiten Zwischenergebnissen verarbeitet werden. Kontinuierlich bedeutet in diesem Zusammenhang, dass die Daten so oft erfasst werden, wie es der Takt des Prozessors und/oder des Sensors zulässt. Durch die kontinuierlich zur Verfügung stehenden Zwischenergebnisse kann jederzeit ein Klassifikationsergebnis aus den zeitnah generierten Zwischenergebnissen generiert werden, ohne dass das erste Kommunikationssystem erst abwarten muss, bis ein vorbestimmtes Messintervall abgelaufen und aktuelle Daten verarbeitet wurden. Ferner werden kontinuierlich neue Zwischenergebnisse generiert, so dass bei einer Authentifizierungsanfrage aktuelle Zwischenergebnisse zur Verfügung stehen, sofern der Nutzer in der nahen Vergangenheit das erste Kommunikationssystem verwendet hat.

In einer Ausführungsform umfassen die verhaltensbasierten Daten ferner biometrische Daten des Nutzers, wobei die biometrischen Daten ferner Daten einer grobmotorischen Bewegung und/oder einer feinmotorischen Bewegung umfassen, wobei das Klassifikationsmodul dazu trainiert ist, eine grobmotorische Bewegung und/oder eine feinmotorische Bewegung zu erkennen.

Eine grobmotorische Bewegung und/oder eine feinmotorische Bewegung des aktuellen Nutzers wird durch den mindestens einen Sensor als Daten erfasst. Das Klassifikationsmodul ist zur Erkennung eines generischen grobmotorischen Bewegungsmusters und/oder eines generischen grobmotorischen Bewegungsmusters mithilfe von Trainingsdatensätzen einer Nutzerkohorte trainiert.

Viele mobile, tragbare Kommunikationssysteme, wie Smartphones, sind heute ohnehin mit Sensoren ausgestattet, welche eine Lage des Geräts im Raum erfassen können, wodurch sich zum Beispiel die Anzeige auf dem Bildschirm in die richtige Position relativ zur räumlichen Orientierung des Geräts drehen kann. Ein solcher Sensor ist üblicherweise ein Beschleunigungssensor, ein Gyroskop oder eine Kombination aus beiden. Es ist nicht nur möglich, mit diesem Sensor die Raumlage des ersten Kommunikationssystems, sondern auch eine grobmotorische Bewegung des Nutzers zu erfassen, wodurch der Sensor als Bewegungssensor verwendet werden kann.

Eine grobmotorische Bewegung bezeichnet dabei alle Bewegungsfertigkeiten, die ein Mensch mit seinen Gliedmaßen, seinem Rumpf und seinem Kopf erlernen kann. Dabei werden Hauptmuskelgruppen beansprucht. Fertigkeiten der Grobmotorik sind zum Beispiel Gehen, Joggen, Rennen, Hüpfen, Fahrradfahren oder Autofahren. Auch das Bewegen des Armes, um eine Verrichtung, wie beispielsweise ein Heben eines Glases zum Trinken oder Essen, auszuführen, kann ebenso wie eine Armbewegung, um ein Mobiltelefon aus der Tasche zu ziehen, als grobmotorische Bewegung aufgefasst werden.

Eine feinmotorische Bewegung ist eine Bewegung feiner Muskelgruppen, wie beispielsweise die Muskulatur der Finger. Feinmotorik bezeichnet gezielte und koordinierte Bewegung, beispielsweise von Hand- und/oder Fingermuskulatur, aber auch den Muskeln des Mundes, der Augen und des Gesichtes. Die feinmotorische Bewegung, welche durch einen feinmotorischen Sensor des ersten Kommunikationssystems erfasst wird, kann etwa eine bestimmte Bewegung der Finger umfassen.

Nach Ausführungsformen der Erfindung werden durch den Sensor zur Erfassung einer feinmotorischen Bewegung die Eingabegeschwindigkeit, der Eingabetakt und/oder die Eingabegenauigkeit des Nutzers erfasst, während er eine Eingabe in das erste und/oder zweite Kommunikationssystem tätigt. Eine solche Eingabe kann beispielsweise, ohne darauf beschränkt zu sein, das Tippen von Wörtern bzw. Wischen von Wörtern, das heißt einem zu tippen analogen Eingabeverfahren, bei welchem der oder die Finger bei Auswahl von Buchstaben den Kontakt zur Bildschirmoberfläche jedoch beibehält, auf einer virtuellen Tastatur, das Nachfahren von auf dem Bildschirm gezeigten geometrischen Figuren oder eine andere Bewegung, mit der der Nutzer eine Eingabe tätigt, umfassen. Ferner können feinmotorische Bewegungen Änderungen der Ausrichtung, wie etwa des Neigungswinkels des ersten Kommunikationssystems während der Nutzung umfassen.

Ein Sensor zur Erfassung einer feinmotorischen Bewegung kann beispielsweise als optisches System oder als ein Touchpad bzw. ein Touchscreen, insbesondere, jedoch ohne darauf beschränkt zu sein, ein resistiver Touchscreen, ein oberflächenkapazitiver Touchscreen, ein projiziert kapazitiver Touchscreen oder ein induktiver Touchscreen ausgebildet sein. Durch das Verwenden einer feinmotorischen Bewegung eines Nutzers erhöht sich die Sicherheit der verhaltensbasierten Authentifizierung, da weitere Parameter nötig sind, um den Nutzer zu authentifizieren.

Ein jeder Mensch führt diese grob- und/oder feinmotorischen Bewegungen auf seine eigene Art und Weise aus. Somit kann einem bestimmten Nutzer eines ersten Kommunikationssystems ein ganz bestimmtes, charakteristisches Bewegungsprofil zugeordnet werden. Anhand dieses Bewegungsprofils ist der Nutzer identifizierbar. Die durch den mindestens einen Sensor erfassten Daten werden einem solchen Bewegungsprofil zugeordnet. Das Klassifikationsmodul ist ferner dazu konfiguriert das Bewegungsmuster des Nutzers zu erkennen.

Trainieren umfasst in diesem Kontext, dass das Klassifikationsmodul durch Auswertung von Trainingsdatensätzen einerseits die Fähigkeit erlangt generische und andererseits nutzerindividuelle Bewegungsmuster zu erkennen. Ein Training zum Erkennen eines generischen Bewegungsmusters umfasst beispielsweise eine Auswertung mehrerer Trainingsdatensätze einer Nutzerkohorte, wobei jeder der Trainingsdatensätze jeweils einem der Nutzer der Nutzerkohorte zugeordnet ist und Daten zu einer für alle Nutzer der Nutzerkohorte identischen Bewegungsart umfasst. Durch die Auswertung wird ein für die identische Bewegungsart aller Nutzer gemeinsames generisches Bewegungsmuster identifiziert und zum zukünftigen Erkennen extrahiert. Ein Training zum Erkennen eines nutzerindividuellen Bewegungsmusters umfasst beispielsweise eine Auswertung von Bewegungsdaten eines individuellen Nutzers, wobei die Bewegungsdaten Daten zu einer bestimmten Bewegungsart umfassen. Durch die Auswertung wird ein für die entsprechende Bewegungsart nutzerindividuelles Bewegungsmuster identifiziert und zum zukünftigen Erkennen nutzerindividueller Bewegungsmuster extrahiert. Diese Auswertung erfolgt unter Verwendung eines generischen Bewegungsmusters für die bestimmte Bewegungsart, welche zuvor ebenfalls trainiert wurde.

Ferner können die nutzerindividuellen Bewegungsmuster in Abhängigkeit davon variieren, in welchem emotionalen Zustand sich der Nutzer befindet. Ein gestresster Nutzer beispielsweise zeigt ein anderes Bewegungsmuster beim Gehen, als ein glücklicher oder entspannter Nutzer. Ferner zeigt beispielsweise ein enttäuschter Nutzer ein anderes Tippverhalten, als ein euphorisierter Nutzer.

Die biometrischen Daten können durch einen Sensor zur Erfassung von biometrischen Daten erfasst werden. Dabei können die biometrischen Daten unter anderem die Maße des Gesichts, die Fingerform, die Ohrmuschelform, das Retina- oder Irismuster, der Fingerabdruck eines Fingers oder physiologische Daten, wie zum Beispiel der Blutdruck oder der Puls des Nutzers, insbesondere bei spezifischen Aktivitäten wie dem Laufen, sein.

In einer Ausführungsform können die biometrischen Daten, insbesondere die Maße des Gesichts, das Iris- und/oder Retinamuster und die Ohrmuschelform, erfasst werden, wenn der Nutzer ohnehin das erste Kommunikationssystem benutzt und/oder sich authentifizieren möchte. In dem Moment, in dem der Nutzer das erste Kommunikationssystem benutzt und/oder sich authentifizieren möchte, kann je nach ausgeführter Anwendung davon ausgegangen werden, dass der Nutzer auf den Bildschirm des ersten Kommunikationssystems schaut. Dies ist beispielsweise bei einer Chat- oder Nachrichtenanwendung der Fall. Beispielsweise handelt es sich bei dem ersten Kommunikationssystem um ein Smartphone oder ein anderes Telekommunikationssystem, welches mit einer Kamera ausgestattet ist. Nach Ausführungsformen ist diese Kamera auf der Seite des Bildschirms auf dem ersten Kommunikationssystem positioniert, wodurch es möglich ist, dass eine Hintergrundanwendung des ersten Kommunikationssystems ein Foto des Nutzers aufnimmt, während er das erste Kommunikationssystem benutzt. Dieses Foto kann ausgelesen und somit die biometrischen Daten des Nutzers erfasst werden. Sollte der Nutzer auf sein System zugreifen wollen, wird ein Foto erstellt oder es werden ein oder mehrere der zuletzt gespeicherten Fotos herangezogen und die biometrischen Daten, welche aus dem erstellten Foto bzw. den gespeicherten Fotos errechnet werden, zur Authentifizierung verwendet.

In einer weiteren Ausführungsform umfasst das erste Kommunikationssystem beispielsweise einen Drucksensor oder einen optischen Sensor zur Erfassung eines Pulsschlages, mit dem der Puls und der Blutdruck des Nutzers bestimmt werden können.

Durch die Verwendung eines direkt am Körper getragenen biometrischen Sensors, insbesondere einem biometrischen Sensor einer Smart-Watch, etwa einem Drucksensor oder optischem Sensor, ergibt sich in vorteilhafterweise, dass die biometrischen Daten kontinuierlich erfassbar sind, da der Nutzer die Smart-Watch während des regulären Gebrauchs an seinem Handgelenk trägt.

In einer weiteren Ausführungsform umfasst das mobile, tragbare Kommunikationssystem einen Sensor zur Erfassung eines Fingerabdrucks des Nutzers. In vorteilhaften Ausführungsformen ist der Sensor an Stellen des ersten Kommunikationssystems positioniert, an denen der Nutzer mit seinen Fingerspitzen das erste Kommunikationssystem festhält und/oder zu Steuerung von Funktionen regelmäßig berührt.

Durch die Verwendung eines Fingerabdrucksensors, insbesondere an einer Stelle, an der sich während des regulären Gebrauchs die Fingerspitzen des Nutzers befinden, ergibt sich in vorteilhafter Weise, dass der Fingerabdruck, welcher für jeden Menschen einzigartig ist, als Identifikationsmerkmal des Nutzers zur Authentizitätsprüfung des Nutzers beiträgt und somit die Sicherheit des Verfahrens erhöht.

Durch die Verwendung der biometrischen Daten des Nutzers zur verhaltensbasierten Authentifizierung des Nutzers ergibt sich in vorteilhafter Weise, dass die Daten, welche zur Authentifizierung herangezogen werden, höchst persönlich vom Nutzer abhängig sind. Insbesondere biometrische Daten bieten eine hohe Fälschungssicherheit, wodurch die Sicherheit der Authentifizierung gesteigert wird.

In einer Ausführungsform umfassen das Zuordnen des Nutzers zu einer Identität eines registrierten Nutzers und das Zuordnen des Nutzers zu einem emotionalen Zustand jeweils die folgenden Schritte:
- Generieren von Vergleichsparametern aus einem Vergleichsdatensatz,
- Generieren von Klassifikationsparametern aus den Daten,
- Vergleichen der Vergleichsparameter mit den Klassifikationsparametern und
- Berechnen der Zuordnungswahrscheinlichkeit der jeweiligen Zuordnung aus einem Ergebnis des Vergleichs,
wobei die Zuordnung des Nutzers zu einer Identität eines registrierten Nutzers aufgrund der Zuordnungswahrscheinlichkeit der Zuordnung des Nutzers zu einer Identität eines registrierten Nutzers erfolgt,
wobei die Zuordnung des Nutzers zu einem emotionalen Zustand aufgrund der Zuordnungswahrscheinlichkeit der Zuordnung des Nutzers zu einem emotionalen Zustand erfolgt.

In einer weiteren Ausführungsform werden die Zuordnung des Nutzers zu einer Identität eines berechtigten Nutzers und die Zuordnung des Nutzers zu einem emotionalen Zustand parallel zueinander ausgeführt. Beispielsweise werden die Zuordnungen von jeweils einem Kern eines Multikernprozessors ausgeführt.

In einer weiteren Ausführungsform wird die Zuordnung des Nutzers zu einer Identität eines registrierten Nutzers vor der Zuordnung des Nutzers zu einem emotionalen Zustand ausgeführt.

Das Ausführen der Zuordnung des Nutzers zu einer Identität eines registrierten Nutzers vor der Zuordnung des Nutzers zu einem emotionalen Zustand bewirkt in vorteilhafter Weise, dass der emotionale Zustand des Nutzers nur dann erfasst wird, wenn er tatsächlich das Kommunikationssystem bei sich trägt und/oder verwendet. In Momenten, in denen der Nutzer das erste Kommunikationssystem nicht bei sich trägt bzw. in denen er das erste Kommunikationssystem nicht verwendet, werden ebenfalls Daten erfasst. Das erste Kommunikationssystem vergleicht die erfassten Daten mit dem Vergleichsdatensatz und bestimmt somit, ob der Nutzer das erste Kommunikationssystem nutzt und/oder bei sich trägt. Nutzt eine Person das erste Kommunikationssystem, welche nicht der registrierte Nutzer ist, beispielsweise weil der Nutzer das erste Kommunikationssystem der Person ausgehändigt hat oder weil die Person dem Nutzer das Kommunikationssystem entwendet hat, so unterscheiden sich die erfassten Daten ebenfalls von den Daten des Vergleichsdatensatzes. In beiden Fällen würde die Zuordnung des emotionalen Zustands nicht durchgeführt werden, da der Nutzer das Kommunikationssystem nicht verwendet. Diese Ausführungsform ist besonders vorteilhaft, da somit die Anzahl der benötigten Rechenoperationen gesenkt und der Energieverbrauch des mobilen, tragbaren ersten Kommunikationssystems gesenkt wird. Eine solche Energieeinsparung kann insbesondere im Fall einer Energieversorgung des mobilen, tragbaren ersten Kommunikationssystems mittels Batterie vorteilhaft sein.

In einer Ausführungsform werden für die Zuordnung des Nutzers zu einer Identität eines registrierten Nutzers und die Zuordnung des Nutzers zu einem emotionalen Zustand zwei verschiedene Vergleichsdatensätze verwendet. In einer weiteren Ausführungsform wird für die Zuordnung des Nutzers zu einer Identität eines registrierten Nutzers und die Zuordnung des Nutzers zu einem emotionalen Zustand ein gemeinsamer Vergleichsdatensatz verwendet.

Ein Vergleichsdatensatz umfasst Daten des Nutzers, welche das Verhalten und/oder eine individuelle Eigenschaft des Nutzers charakterisieren. Die Daten des Vergleichsdatensatzes und die erfassten Daten umfassen mindestens einen Parameter, welcher mindestens eine Eigenschaft des Nutzers und/oder seines Verhaltens quantifiziert. Der Vergleichsdatensatz umfasst die Daten des in dem Kommunikationssystem registrierten Nutzers. Die erfassten Daten umfassen die Daten des aktuellen Nutzers. Das Klassifikationsmodul generiert aus dem Vergleich der erfassten Daten mit dem Vergleichsdatensatz einen ersten Konfidenzwert, welcher den quantitativen Unterschied zwischen Klassifikationsparametern, generiert aus den erfassten Daten, und Vergleichsparametern, generiert aus dem Vergleichsdatensatz, ausdrückt. Der quantitative Unterschied lässt sich in eine Zuordnungswahrscheinlichkeit übersetzen, mit der dem Nutzer die Identität eines registrierten Nutzers bzw. der emotionale Zustand zugeordnet wird. Ist die bestimmte Zuordnungswahrscheinlichkeit größer als ein vorgegebener Schwellenwert, so geniert das Klassifikationsmodul das erste Zwischenergebnis bzw. das zweite Zwischenergebnis, da sich der Nutzer mittels der erfassten Daten einer Identität eines registrierten Nutzers und einem emotionalen Zustand zuordnen lässt. Über ein Festlegen des Schwellenwertes kann ein Kriterium für die Akzeptanz der Zuordnung festgelegt werden.

Besonders vorteilhaft ist diese Ausführungsform, da die erfassten Daten eine doppelte Verwendung finden. Sie werden einerseits dazu verwendet den Nutzer als ein registrierter Nutzer zu identifizieren und andererseits dazu, den emotionalen Zustand des Nutzers zu klassifizieren.

In einer Ausführungsform sind die einzelnen Klassifikationsparameter bei der Berechnung der Zuordnungswahrscheinlichkeit mit jeweils einem Gewichtungsfaktor versehen, wobei die Gewichtungsfaktoren dem jeweiligen Klassifikationsparameter zugeordnet werden.

Durch das Verwenden von Gewichtungsfaktoren für die jeweiligen Klassifikationsparameter bei der Berechnung der Zuordnungswahrscheinlichkeit kann sich in vorteilhafter Weise eine Erhöhung der Genauigkeit der Zuordnungswahrscheinlichkeit und somit bei der Authentifizierung ergeben. Die einzelnen Klassifikationsparameter können nach Wichtigkeit und/oder Genauigkeit Ihrer Bestimmbarkeit gewichtet werden. Da sich jeder Nutzer unterschiedlich verhält, spielen auch die einzelnen Klassifikationsparameter unterschiedlich starke Rollen bei der verhaltensbasierten Authentifizierung des Nutzers. Ein erster Nutzer könnte beispielsweise regelmäßig eine Radioanwendung seines ersten Kommunikationssystems nutzen, während ein zweiter Nutzer niemals eine Radioanwendung nutzt. Durch die Möglichkeit des Gewichtens der einzelnen Klassifikationsparameter kann dem Klassifikationsparameter für die Nutzung einer Radioanwendung für den ersten Nutzer ein höherer Gewichtungsfaktor zugewiesen werden als dem zweiten Nutzer.

In einer weiteren Ausführungsform der Erfindung sind die Gewichtungsfaktoren der Klassifikationsparameter durch die Authentifizierungsanfrage vorgegeben. Durch das Vorgeben der Gewichtungsfaktoren durch die Authentifizierungsanfrage ergibt sich in vorteilhafter Weise, dass unterschiedliche Klassifikationsparameter individuell in Abhängigkeit davon gewichtet werden können, wie hoch der Sicherheitsgrad der Authentifizierung sein muss. So können beispielsweise bei Authentifizierungen, die einer sehr hohen Zuordnungswahrscheinlichkeit bedürfen, alle Parameter miteinbezogen werden. Demgegenüber werden beispielsweise bei einer Authentifizierung, welche eine niedrige Sicherheitsstufe bedarf, nur einige oder ein einzelner Klassifikationsparameter zur Auswertung herangezogen.

In einer weiteren Ausführungsform der Erfindung sind die einzelnen Gewichtungsfaktoren der jeweiligen Klassifikationsparameter fest vorgegeben. Fest vorgegeben meint in diesem Zusammenhang, dass die Gewichtungsfaktoren von vornerein beispielsweise bei der Erstinbetriebnahme des ersten Kommunikationssystems festgelegt werden und keine Änderung der Gewichtungsfaktoren während des bestimmungsmäßigen Betriebes des ersten Kommunikationssystems vorgegeben sind.

Durch das Vorgeben der Gewichtungsfaktoren für die Klassifikationsparameter ergibt sich in vorteilhafter Weise ein reduzierter Rechenaufwand, welcher insbesondere für mobile, tragbare erste Kommunikationssysteme einen niedrigen Batterieverbrauch zufolge hat. Das mobile, tragbare Kommunikationssystem muss nicht überprüfen, welche Gewichtungsfaktoren für welchen Klassifikationsparameter festzulegen sind, sondern letztendlich nur in seinem Speicher die entsprechenden Klassifikationsparameter und dessen Gewichtungsfaktor auslesen.

In einer weiteren Ausführungsform der Erfindung legt der Nutzer in einem Initiierungsprozess die Gewichtungsfaktoren der einzelnen Klassifikationsparameter selbst fest. Die festgelegten Gewichtungsfaktoren werden dann in einer Konfigurationsdatei in dem Speicher des ersten Kommunikationssystems gespeichert.

Die Gewichtungsfaktoren der einzelnen Klassifikationsparameter werden nach einer weiteren Ausführungsform durch eine zentrale Instanz, beispielsweise den Hersteller des ersten Kommunikationssystems, einen Dritthersteller oder einen Operator bzw. Eigentümer des ersten Kommunikationssystems festgelegt.

Durch das Festlegen der Gewichtungsfaktoren durch den registrierten Nutzer selbst ergibt sich in vorteilhafter Weise, dass der registrierte Nutzer selbst bestimmen kann, wie weit sein Anwendungsverhalten bzw. sein Verhaltensmuster zur verhaltensbasierten Authentifizierung beitragen. Dies erhöht die Freiheit des registrierten Nutzers bei der Konfiguration des Systems, da der registrierte Nutzer selbst entscheiden kann, welche Klassifikationsparameter von seinem Verhaltensmuster umfasst werden. Zum Beispiel kann der registrierte Nutzer festlegen, dass das Verwenden einer feinmotorischen Bewegung nicht oder nur sehr schwach in die Generierung des Klassifikationsergebnisses miteingehen soll, da er das erste Kommunikationssystem, insbesondere zur Texteingabe, üblicherweise nur unregelmäßig nutzt. Der gleiche Nutzer könnte hingegen die Klassifikationsparameter bezüglich einer grobmotorischen Bewegung stärker in die Generierung des Klassifikationsergebnisses miteinfließen lassen, da er einen sehr strukturierten Tagesablauf hat und mit hoher Regelmäßigkeit an bestimmten Orten Sport treibt.

In Ausführungsformen ist die Mehrzahl von emotionalen Zuständen durch Parameterbereiche definiert, welche aus Daten einer Nutzerkohorte berechnet wurden.

In Ausführungsformen umfasst das erste Kommunikationssystem Anwendungen, wobei die Daten ferner Anwendungsdaten des Nutzers umfassen.

In einer weiteren Ausführungsform werden aus den Anwendungsdaten Anpassungsparameter bestimmt, welche externe Einflussfaktoren der biometrischen Daten beschreiben, wobei die Anpassungsparameter bei der Generierung des zweiten Zwischenergebnisses zur Anpassung der Zuordnung des Nutzers zu einem emotionalen Zustand an die Einflussfaktoren verwendet werden.

Durch das Verwenden der Anpassungsparameter zur Generierung des Klassifikationsergebnisses ergibt sich in vorteilhafter Weise, dass das Klassifikationsergebnis an externe Einflussfaktoren angepasst werden kann. Befindet sich der Nutzer beispielsweise in einer Umgebung mit einer hohen oder niedrigeren Lufttemperatur und wird die Körpertemperatur mittels eines Sensors an einem Handgelenk gemessen, so kann die Messung durch die Lufttemperatur beeinflusst werden. Die gemessene Temperatur an dem Handgelenk kann beispielsweise unter einem Durchschnittswert liegen, falls sich der Nutzer in einer kalten Umgebung befindet. Durch das Verwenden von beispielsweise Wetterdaten, welche die aktuelle Lufttemperatur umfassen, kann die gemessene Temperatur mit den Wetterdaten korrigiert werden. In einem weiteren Beispiel ändert sich der Blutdruck des Nutzers, wenn er sich in einer anderen Höhe über dem Meeresspiegel als gewöhnlich aufhält. Dies kann beispielsweise durch ein Barometer erfasst oder durch einen GPS- oder Galileo-Signal bestimmt werden und somit die Auswertung des Blutdrucks des Nutzers korrigieren. Da solche Umwelteinflüsse das Verhalten und/oder den emotionalen Zustand eines Nutzers beeinflussen können, werden gemäß dieser Ausführungsform die Klassifikationsparameter, insbesondere bei starken externen Einflussfaktoren, wie beispielsweise Temperatur- oder Druckunterschieden, unter Verwendung der Anpassungsparameter korrigiert.

Je nachdem welche Anwendungen ausgeführt werden, lassen sich eine Mehrzahl von physiologischen Parametern korrigieren. Insbesondere kann die Kombination von verschiedenen Einflussfaktoren einzelne und/oder eine Mehrzahl von physiologischen Parametern korrigieren. Beispielsweise können Luftfeuchtigkeit und Luftdichte, wobei letztere durch die aktuelle Höhe über dem Meeresspiegel errechnet wird, das Verhältnis von Puls und Atemfrequenz zur Bewegungsgeschwindigkeit beeinflussen. Ist der Einfluss bekannt, kann eine entsprechende Korrektur vorgenommen werden.

In einer Ausführungsform umfassen die Anwendungsdaten:
- Positionsdaten des ersten Kommunikationssystems, welche durch ein Verfahren zur Positionsbestimmung durch einen Sensor zur Bestimmung der Position des ersten Kommunikationssystems erfasst werden, und/oder
- Anwendungsnutzungsdaten des Nutzers, und/oder
- Verbindungsdaten des ersten Kommunikationssystems mit anderen Geräten und/oder
- Kalender- und/oder Uhrzeitdaten einer in dem ersten und/oder zweiten Kommunikationssystem implementierten Uhr oder einer externen Uhr, deren Signal durch einen Sensor des ersten und/oder zweiten Kommunikationssystems empfangen wird und/oder
- Umgebungsdaten, welche mittels mindestens eines internen Umgebungssensors oder mittels mindestens eines externen Umgebungssensors erfasst werden, dessen Signal durch einen Sensor des ersten und/oder zweiten Kommunikationssystems empfangen wird.

Die Positionsdaten des ersten Kommunikationssystems werden durch ein Verfahren zur Positionsbestimmung durch einen Positionssensor des ersten Kommunikationssystems erfasst. Ein solches Verfahren kann zum Beispiel ein Erfassen eines GPS-Signals oder einer triangulierten Position aus WLAN-Verbindungsdaten oder Verbindungsdaten eines sonstigen Funknetzes umfassen, welches Funkzellen aufweist, wie etwa ein Mobilfunknetz.

Durch das Verwenden der Positionsdaten zur verhaltensbasierten Authentifikation des Nutzers ergibt sich in vorteilhafter Weise, dass ein regelmäßiger Aufenthaltsort des Nutzers (zum Beispiel Zuhause, bei der Arbeit oder an anderen Orten, die er regelmäßig aufsucht) erfasst wird. Ein unberechtigter Nutzer, insbesondere ein Dieb, der das erste Kommunikationssystem benutzt, wird sich in der Regel nicht an den Orten aufhalten, welche der registrierte Nutzer regelmäßig aufsucht. Dadurch ist das erste Kommunikationssystem in der Lage zu erkennen, ob der Nutzer der registrierte Nutzer ist. Damit können die Positionsdaten zur Verbesserung der verhaltensbasierten Authentifikation beitragen.
Insbesondere die Erfassung der Positionsdaten über einen längeren Zeitraum hinweg steigert die Sicherheit des Systems, da der Dieb viele der regelmäßig aufgesuchten Orte des Nutzers kennen und sich zusätzlich über längere Zeit an diesen aufhalten muss, um sich erfolgreich authentifizieren zu können.

Die Anwendungsdaten umfassen ein Anwendungsnutzungsverhalten des Nutzers, wobei das Anwendungsnutzungsverhalten Informationen umfasst, welche beschreiben, wann welche Anwendungen von Nutzer auf dem ersten Kommunikationssystem gestartet und/oder ausgeführt werden. So kann zum Beispiel erfasst werden, wann bzw. wie oft der Nutzer unter Verwendung welcher Anwendung Radio hört und/oder welchen Radiosender er hört, Nachrichten liest oder seine Kamera bedient. Insbesondere im Alltag oft verwendete Anwendungen können ein nutzerspezifisches Anwendungsnutzungsprofil ergeben, anhand dessen der Nutzer identifiziert werden kann.

Durch das Miteinbeziehen des Anwendungsnutzungsverhaltens des Nutzers in das Authentifizierungsverfahren steigt die Sicherheit des Verfahrens, da ein unberechtigter Nutzer, insbesondere ein Dieb, welcher das erste Kommunikationssystem gestohlen hat, auch das Anwendungsnutzungsverhalten des Nutzers imitieren müsste, um erfolgreich authentifiziert zu werden. Ferner variiert das Anwendungsnutzungsverhalten eines Nutzers mit seinem emotionalen Zustand. Im Umkehrschluss lassen sich aus dem Anwendungsnutzungsverhalten Informationen bezüglich des emotionalen Zustands des Nutzers ableiten. Ein nervöser Nutzer könnte beispielsweise öfters auf die Uhr schauen oder eine Kurznachrichten-Anwendung benutzen. Ein ruhiger Nutzer hört beispielsweise in dem Speicher des ersten Kommunikationssystems gespeicherte Musik.

Aus dem Anwendungsnutzungsverhalten können ferner Hinweise auf einen emotionalen Zustand des Nutzers abgeleitet werden. Startet der Nutzer überdurchschnittlich häufig eine Nachrichtenanwendung, wie etwa eine E-Mail-Anwendung oder einen Instant-Messenger, ohne selbst eine Nachricht zu schreiben, so könnte dies beispielsweise auf einen ungeduldigen oder nervösen Zustand hindeuten. Ferner könnte ein überdurchschnittlich häufiges Wechseln der Anwendungen oder Funktionen einer Anwendung, beispielsweise der Radiosender, auf einen gestressten Zustand hindeuten.

Die Verbindungsdaten des ersten Kommunikationssystems mit anderen Kommunikationsgeräten und Kommunikationssystemen, wie zum Beispiel Computern, kommunikationsfähigen Haushaltsgeräten, können dazu verwendet werden, ein typisches Verbindungsmuster des Nutzers aufzuzeigen. So können zum Beispiel einzelne Geräte über WLAN, Bluetooth, RFID, NFC oder ein Kabel mit dem ersten Kommunikationssystem verbunden werden. So kann für den Nutzer ein Verbindungsprofil angelegt werden, welches Informationen über die regelmäßigen Verbindungen des ersten Kommunikationssystems mit weiteren Geräten enthält.

Beispielsweise kann ein Nutzer das erste Kommunikationssystem mit dem privaten WLAN einer Wohnung oder einem öffentlichen WLAN verbinden. In einer weiteren Ausführungsform der Erfindung verbindet der Nutzer das erste Kommunikationssystem mit Haushaltsgeräten und/oder einem Computer über das Internet oder ein Intranet, wodurch sich ein nutzerspezifisches Verbindungsprofil ergibt. Dieses Verbindungsprofil kann beispielsweise, ohne darauf beschränkt zu sein, eine Verbindung zu einer Waschmaschine, einem Trockner, einem Kühlschrank oder ähnlichen Haushaltsgeräten, sowie Geräten eines Smart-Home-Systems, wie etwa Beleuchtung, Alarmanlage, Klimaanlage, Heizung, Audioanlagen, Video- bzw. Fernsehanlagen, und/oder einem PC umfassen, welche der Nutzer Zuhause über das Internet, ein Intranet oder individuelle Funkverbindungen ansteuert.

Durch die Verwendung der Verbindungsdaten des Nutzers zur verhaltensbasierten Authentifizierung des Nutzers ergibt sich in vorteilhafter Weise, dass ein unberechtigter Nutzer die Geräte kennen und gegebenenfalls Zugriff auf die Geräte besitzen muss, mit denen der registrierte Nutzer normalerweise das erste Kommunikationsgerät verbindet.

Durch die Verwendung der Verbindungsdaten zur verhaltensbasierten Authentifikation eines Nutzers ergibt sich in vorteilhafter Weise, dass der aktuelle Nutzer, welcher zum Beispiel eine Smartwatch trägt, sich über das Tragen der Smartwatch authentifizieren kann. Somit fungiert die Smartwatch als eine Art Schlüssel. Ein Dieb, welcher das erste Kommunikationssystem gestohlen hat, müsste also auch die Smartwatch in seinen Besitz bringen, um sich zu authentifizieren.

Kalender- und/oder Uhrzeitdaten können durch eine im ersten Kommunikationssystem implementierte Uhr oder eine externe Uhr, deren Signal durch einen Sensor, insbesondere ein Funksignal durch einen Funksensor, des ersten Kommunikationssystems empfangen wird, erfasst werden. In einer weiteren Ausführungsform der Erfindung werden die Verbindungsdaten des ersten Kommunikationssystems mit anderen Geräten und/oder die Positionsdaten des ersten Kommunikationssystems mit den Kalender- und/oder Uhrzeitdaten korreliert.

Durch die Verwendung der Kalender- und/oder Uhrzeitdaten zur verhaltensbasierten Authentifizierung des Nutzers ergibt sich in vorteilhafter Weise, dass insbesondere durch die Kombination mit den vorherigen Anwendungen ein zeitspezifisches Anwendungsverhalten des Nutzers erstellt werden kann. So kann zum Beispiel erkannt werden, dass sich von Montag bis Freitag der Nutzer auf dem Weg zur Arbeit befindet und dabei einen bestimmten Radiosender hört und am Wochenende einen Spaziergang unternimmt und dabei ausgewählte Musik über eine Musikanwendung abspielt oder, dass der Nutzer jeden Abend zu einer festen Uhrzeit, beispielsweise um 20 Uhr, die Nachrichten über sein erstes Kommunikationssystem liest. Die Verwendung der Kalender- und/oder Uhrzeitdaten haben somit eine erhöhte Sicherheit des Verfahrens zufolge, indem sie zu einem zeitlich strukturierten Anwendungsnutzungsprofil des Nutzers beitragen, welches gegenüber einem zeitlich unstrukturierten Anwendungsnutzungsprofil schwerer zu imitieren ist. Ferner kann der emotionale Zustand des Nutzers mit der Tageszeit, dem Wochentag und/oder der Jahreszeit variieren. Beispielsweise ist ein Nutzer am Morgen leichter reizbar, ein weiterer Nutzer fühlt sich regelmäßig unwohl an einem Montagmorgen und ein dritter Nutzer ist niedergeschlagen im Winter.

Ferner ist es möglich Einträge des Kalenders des Nutzers auf emotionale Ereignisse zu überprüfen. Eine eingetragene Trauerfeier kann beispielsweise die Zuordnungswahrscheinlichkeit des Zustands "traurig" erhöhen, ein anstehendes Bewerbungsgespräch oder eine Prüfung können die Wahrscheinlichkeit für den Zustand "nervös" erhöhen.

Nach Ausführungsformen können beispielsweise Abweichungen von einem durchschnittlichen und/oder erwarteten emotionalen Profil eines Nutzers erkannt werden, woraufhin das Klassifikationsergebnis den emotionalen Zustand "Auffälligkeit" umfasst. Ebenso kann ein registrierter Nutzer identifiziert und ein Abgleich mit seinem durchschnittlichen oder üblichen emotionalen Profil vorgenommen werden. Das Klassifikationsergebnis kann den emotionalen Zustand beispielsweise als prozentuale Abweichung von dem durchschnittlichen oder üblichen emotionalen Profil erfassen. Überschreitet die Abweichung einen Schwellenwert, kann dies zu einem negativen Authentifizierungsergebnis führen. Eine Klassifikation nach Abweichungsgrad von einem erwarteten emotionalen Profil kann insbesondere die Privatsphäre und/oder Persönlichkeitsrechte des Nutzers schützen. So können anhand des Klassifikationsergebnisses in diesem Fall beispielsweise keine Rückschlüsse auf die konkrete Gefühlslage oder eine psychologische Diagnose gezogen werden. Anhand des Klassifikationsergebnisses ist beispielsweise nur ablesbar, dass eine signifikante Abweichung vorliegt. Welcher Art diese Abweichung ist, ist nicht notwendigerweise ableitbar.

Durch das Verwenden der Uhrzeit- und Kalenderdaten lässt sich beispielsweise ein emotionales Profil des Nutzers erstellen, dass zeitabhängig beschreibt, welchen emotionalen Zustand der Nutzer gerade aufweist. Anhand dieser Klassifizierung können beispielsweise der Nutzer oder eine zur Auswertung berechtigte Person Untersuchungen bezüglich der Abweichung einleiten. Beispielsweise hat ein Nutzer eine unerlaubte Handlung vorgenommen oder plant eine solche vorzunehmen, weshalb er nervös ist. Das Klassifikationsmodul detektiert die Abweichung des emotionalen Zustandes und kann zur Aufklärung und/oder Früherkennung möglicher Probleme beitragen.

Ferner können beispielsweise anhand von Kalendereinträgen, Nachrichtenmeldungen und/oder amtlichen Verlautbarungen mögliche Einflussfaktoren auf den emotionalen Zustand eines Nutzers abgeleitet werden. Diese Einflussfaktoren können für eine Kalibrierung bzw. Anpassung des zu erwartenden emotionalen Profils des Nutzers verwendet werden. Ist ein ungewöhnliches Ereignis eingetreten oder steht ein ungewöhnliches Ereignis an, so kann das erwartete emotionale Profil entsprechend angepasst werden. Von dem entsprechenden Ereignis verursachte Abweichungen, deren Ursache bekannt ist, können somit vollständig oder zumindest teilweise aus dem Klassifikationsergebnis herausgerechnet werden. Das Klassifikationsergebnis gibt in diesem Fall beispielsweise Abweichungen an, welche zusätzlich zu den von dem entsprechenden Ereignis verursachten Abweichungen auftreten. Hierzu werden Kalendereinträge, Nachrichtenmeldungen und/oder amtlichen Verlautbarungen selbst gemäß ihrem möglichen Einfluss auf die Klassifikation von emotionalen Zuständen klassifiziert und entsprechend berücksichtigt.

In einer weiteren Ausführungsform wird der Abstand zwischen zwei oder mehreren Kommunikationsgeräten eines ersten Kommunikationssystems aufgrund der Signalstärke des Signals der Drahtlosverbindung zwischen den Geräten ermittelt. Ein solches Drahtlosverbindungssignal kann beispielsweise ein Bluetoothsignal, ein WLAN-Signal oder ein Funksignal sein. Der aus dem Drahtlosverbindungssignal ermittelte Abstand zwischen den Geräten kann gemäß dieser Ausführungsform als Teil der Anwendungsdaten erfasst werden und zur verhaltensbasierten Authentifizierung des Nutzers verwendet werden.

Das Erfassen des Abstandes zweier Geräte eines ersten Kommunikationssystems als Teil der Anwendungsdaten und das Verwenden des Abstandes zur verhaltensbasierten Authentifizierung des Nutzers ermöglicht die Erhöhung der Sicherheit des Verfahrens zur verhaltensbasierten Authentifizierung, da ein weiterer Parameter durch einen unberechtigten Nutzer gefälscht bzw. nachgeahmt werden müsste, um sich zu authentifizieren.

Nach Ausführungsformen der Erfindung wird der sich zeitlich variierende Abstand dazu verwendet, um ein grobmotorisches Bewegungsmuster des Nutzers zu erkennen.

Nach einer weiteren Ausführungsform wird dem Nutzer mittels eines Signals signalisiert, falls die Authentifizierung erfolgreich war.

Das signalisieren der erfolgreichen Authentifizierung bewirkt in vorteilhafter Wiese, dass der Nutzer nach dem Authentifizierungsprozess weiß, dass die Authentifizierung beendet und dem Nutzer Zugriff oder Zutritt gewährt wird. Der Nutzer ist nicht länger ungewiss über den Ausgang der Authentifizierung und kann seine Handlung, beispielsweise das Betreten eines Bereichs, welcher durch ein Sicherheitssystem geschützt ist, oder beispielsweise mit den Startvorbereitungen eines Flugzeugs fortfahren.

In einer Ausführungsform umfasst das Signal das Ergebnis der Zuordnung des Nutzers zu einer Identität eines registrierten Nutzers und/oder das Ergebnis der Zuordnung des Nutzers zu einem emotionalen Zustand.

In einer Ausführungsform umfasst das Verfahren ferner ein Trainieren des Klassifikationsmoduls, sofern die Authentifizierung erfolgreich war, wobei das Trainieren des Klassifikationsmoduls ein Hinzufügen der Daten zu dem Vergleichsdatensatz und ein Entfernen von Daten, welche älter als ein Schwellenalter sind, umfasst. Das Klassifikationsmodul wird auf das nutzerspezifische Verhalten des aktuellen Nutzers unter der Voraussetzung trainiert, dass gemäß dem Klassifikationsergebnis der aktuelle Nutzer ein in dem ersten Kommunikationssystem registrierter Nutzer ist. Das erste Kommunikationssystem speichert die erfassten Daten, um diese für einen Vergleich mit neuen Daten eines nächsten Authentifizierungsversuchs zu verwenden. Dazu muss das erste Kommunikationssystem jedoch die Information eines Erfolges der Authentifizierung erhalten, aus welcher sich ergibt, dass die erfassten Daten auch tatsächlich dem registrierten Nutzer zuzuordnen sind.

Durch das Hinzufügen der Daten zu dem entsprechenden Vergleichsdatensatz im Falle einer erfolgreichen Authentifizierung des Nutzers ergibt sich in vorteilhafter Weise ein rückgekoppeltes Trainieren des Klassifikationsmoduls. Der Vergleichsdatensatz und somit die Vergleichsparameter passen sich dem Verhalten des Nutzers an, wodurch das Verfahren gegenüber geringfügigen Verhaltensänderungen resistent wird bzw. sich diesem anpasst. Eine solche Verhaltensänderung kann beispielsweise durch eine Verletzung des Nutzers hervorgerufen werden, welche die Gangart oder das Schreibverhalten beeinflusst. Ein weiteres Beispiel für eine Verhaltensänderung stellt der dauerhafte Wechsel zu einem anderen Radiosender mittels einer Radioanwendung dar. Gefällt dem Nutzer beispielsweise das gesendete Programm seines bisher gehörten Senders nicht mehr, so sucht er sich einen neuen. Ändert sich beispielsweise der Ruhepuls des Nutzers, weil er zum Beispiel seit geraumer Zeit an einem Trainingsprogramm teilnimmt, so würde ein emotionaler Zustand, der durch einen erhöhten Puls erkannt wird, nicht mehr richtig zugeordnet werden können. Bei solchen und ähnlichen Verhaltensänderungen kann sich der Nutzer aufgrund des Speicherns der Daten in dem Speicher des ersten Kommunikationssystems und des Hinzufügens der Daten zu dem entsprechenden Vergleichsdatensatz auch weiterhin erfolgreich authentifizieren.

In einer weiteren Ausführungsform der Erfindung werden die Daten, welche Teil des jeweiligen Vergleichsdatensatzes sind, aus dem Speicher des ersten Kommunikationssystems gelöscht, wenn die Daten älter als eine festgelegte Zeit sind. Die festgelegte Zeit kann beispielsweise Tage, Wochen, Monate oder Jahre betragen. Wird durch das Löschen der Daten der Vergleichsdatensatz vollständig gelöscht, so wird gemäß einer weiteren Ausführungsform der Erfindung ein Signal erzeugt, welches dem Nutzer signalisiert, dass eine Authentifizierung über den gelöschten Vergleichsdatensatz nicht länger möglich ist, bis entsprechende Vergleichsdaten wieder vorhanden sind, das heißt ein neuer Vergleichsdatensatz generiert wurde. Vergleichsdaten für einen solchen neuen Vergleichsdatensatz können beispielsweise erfasst werden, indem sich der Nutzer nichtverhaltensbasiert authentifiziert, beispielsweise über eine PIN oder ein analoges Verfahren, und im Voraus oder im Nachhinein so verhält, dass neue Daten erfasst und in dem Speicher des ersten Kommunikationssystems gespeichert werden, womit die erfassten Daten einen neuen Vergleichsdatensatz bilden.

Durch das Löschen der Daten bei Erreichen eines festgelegten Alters der Daten ergibt sich in vorteilhafter Weise, dass sich der Vergleichsdatensatz und somit die Vergleichsparameter bei Verhaltensänderungen des Nutzers mit verändern können. Da sich das Verhalten des Nutzers, insbesondere über einen längeren Zeitraum von beispielsweise einem Jahr oder mehr, verändern kann, ist es für das Verfahren vorteilhaft, wenn sich die Vergleichsparameter mit dem Verhalten des Nutzers mitändern, d.h. möglicherweise veraltete Daten, welche das aktuelle Verhalten des Nutzers nicht mehr korrekt wiederzugeben vermögen, vorsorglich gelöscht werden. Das Löschen von Daten eines bestimmten Alters bewirkt somit, dass das Verhalten des Nutzers in der Vergangenheit, welches nicht notwendigerweise mit dem Verhalten des Nutzers in der Gegenwart übereinstimmen muss, keinen Einfluss auf die verhaltensbasierte Authentifizierung des Nutzers nimmt. Das Alter von Daten bemisst sich beispielsweise ab dem Zeitpunkt der Erfassung und/oder der Speicherung der Daten.

Die Vergleichsparameter werden in einer Ausführungsform erneut aus dem nun modifizierten Vergleichsdatensatz errechnet, um eine nächste Authentifizierung des Nutzers mit aktuellen Vergleichsparametern durchführen zu können.

In einer weiteren Ausführungsform der Erfindung muss sich der Nutzer nach einer Erstinbetriebnahme des ersten Kommunikationssystems authentifizieren.

Eine Authentifikation nach einer Erstinbetriebnahme kann beispielsweise eine Eingabe eines Einmalpassworts bzw. einer Initialisierungs-PIN umfassen, welche einem registrierten Nutzer beispielsweise im Zuge eines rechtmäßigen Erwerbs des ersten Kommunikationssystems zur Verfügung gestellt wird. Nach weiteren Ausführungsformen kann die Authentifikation nach einer Erstinbetriebnahme beispielsweise auch eine Eingabe bzw. ein Senden eines initialen Authentifizierungstokens in bzw. an das erste Kommunikationssystem umfassen. Das initiale Authentifizierungstoken kann beispielsweise von einem zentralen Authentifizierungsservice bereitgestellt werden, demgegenüber sich der Nutzer als berechtigter Nutzer authentifiziert hat.

Durch das Authentifizieren nach der Erstinbetriebnahme ergibt sich somit in vorteilhafter Weise, dass nur ein berechtigter Nutzer das noch untrainierte System nutzen kann. Im Falle einer Erstinbetriebnahme erfolgt nach und/oder zusammen mit der zuvor genannten Authentifizierung des berechtigten Nutzers, falls diese erfolgreich ist, beispielsweise eine automatische Personalisierung des ersten Kommunikationssystems auf den berechtigten Nutzer. Im Zuge der Authentifizierung und/oder danach werden Daten für eine verhaltensbasierte Authentifizierung des berechtigten Nutzers erfasst und zu dem entsprechenden Vergleichsdatensatz hinzugefügt. Somit wird das Klassifikationsmodul auf den entsprechenden Nutzer trainiert, das heißt das erste Kommunikationssystem wird personalisiert. Schlägt die zuvor genannte Authentifizierung des berechtigten Nutzers fehl, so werden beispielsweise keine Daten erfasst oder erfasste Daten werden nicht zu dem Vergleichsdatensatz hinzugefügt.

In einer weiteren Ausführungsform der Erfindung muss der Nutzer das erste Kommunikationssystem nach der Erstinbetriebnahme personalisieren. Wird das erste Kommunikationssystem zum ersten Mal zur verhaltensbasierten Authentifizierung verwendet, sendet das erste Kommunikationssystem ein Signal an den Nutzer. Das Signal umfasst die Aufforderung zur Personalisierung des ersten Kommunikationssystems durch den Nutzer durch ein gezieltes bzw. nur vorgegebenes Verhalten, welches mindestens einen Vergleichsdatensatz generiert. Beispielsweise wird der Nutzer aufgefordert, mit dem ersten Kommunikationssystem zu laufen oder zu gehen.

Durch das Personalisieren des ersten Kommunikationssystems nach der Erstinbetriebnahme aufgrund eines entsprechenden Signals ergibt sich in vorteilhafter Weise, dass der Nutzer das Verfahren zur verhaltensbasierten Authentifizierung möglichst früh anwenden kann. Das Personalisieren nach der Erstinbetriebnahme umfasst dabei das Erfassen von Daten, um daraus den entsprechenden Vergleichsdatensatz aufzubauen.

In einer Ausführungsform sind auf dem Kommunikationssystem mehrere Nutzer registriert und ein Klassifikationsergebnis wird für jeden Nutzer generiert, wobei das Klassifikationsmodul dazu konfiguriert ist einen Nutzer als einen der registrierten Nutzer zu identifizieren, wobei das Klassifikationsmodul konfiguriert ist einen Nutzerwechsel anhand der Daten zu erkennen, wobei das Klassifikationsmodul auf ein Erkennen einer grob- und/oder feinmotorischen Bewegung des Ab- und/oder Anlegens des ersten Kommunikationssystems konfiguriert und auf ein Erkennen von nutzerspezifischen Bewegungsmustern in den Daten trainiert ist.

Durch die Möglichkeit, mehrere Nutzer zu identifizieren, ergibt sich in vorteilhafter Weise, dass beispielsweise auch Dienstgeräte bzw. Dienstsysteme, die von einem Arbeitgeber an eine Mehrzahl von Mitarbeitern ausgegeben werden, welche das jeweilige erste Kommunikationssystem abwechselnd benutzen, das Verfahren zur verhaltensbasierten Authentifizierung anwenden können.

In einer Ausführungsform ist das erste Kommunikationssystem Teil eines Zutrittskontrollsystems für einen Bereich eines Unternehmens ausgebildet, welchen nur Personen betreten dürfen, welche sich als zutrittsberechtigte Personen authentifizieren. Die Möglichkeit, mehrere Nutzer zu identifizieren, ermöglicht eine Authentifizierung mehrerer Nutzer hintereinander in kurzen zeitlichen Abständen, woraufhin diese Personen in einem kurzen Zeitraum den Bereich betreten können, d.h. Wartezeiten vermieden bzw. minimiert werden. Nach einer weiteren Ausführungsform der Erfindung ist der Zutritt zu dem Bereich im Grundzustand offen. Eine erfolgreiche Authentifizierung gewährt einem Nutzer den Zutritt dadurch, dass ein Schließmechanismus nicht angesteuert wird. Schlägt jedoch eine Authentifizierung fehl, so wird der Schließmechanismus angesteuert und der Zutritt wird dem entsprechenden Nutzer verwehrt.

In einer weiteren Ausführungsform der Erfindung ist das Klassifikationsmodul so konfiguriert, dass es einen Wechsel des Nutzers anhand von grob- und/oder feinmotorischen Daten erkennt. Dazu ist das Klassifikationsmodul beispielsweise auf ein Erkennen einer grob- und/oder feinmotorischen Bewegung des Ab- und Anlegens des ersten Kommunikationssystems konfiguriert. Die unter Umständen bisherigen ersten oder zweiten gespeicherten Zwischenergebnisse werden im Falle eines Nutzerwechsels verworfen, um sicherzustellen, dass bei einem Nutzerwechsel ein nicht authentifizierter Nutzer das erste Kommunikationssystem verwendet. Dieser nicht authentifizierte Nutzer muss sich dann neu authentifizieren.

Im Weiteren werden Ausführungsformen der Erfindung mit Bezugnahme auf die Zeichnungen näher erläutert.

Es zeigen
- Figur 1: einen schematischen Aufbau eines beispielhaften ersten Kommunikationssystems zur verhaltensbasierten Authentifizierung eines Nutzers.
- Figur 2: einen schematischen Ablauf einer verhaltensbasierten Authentifizierung in einem Ablaufdiagramm.
- Figur 3a: Schritte der verhaltensbasierten Authentifizierung in einem schematischen Ablaufdiagramm.
- Figur 3b: Schritte eines Trainings eines Klassifikationsmoduls in einem schematischen Ablaufdiagramm.
- Figur 4: schematische Schritte der verhaltensbasierten Authentifizierung zur Verarbeitung von Daten.
- Figuren 5: beispielhafte Parameter und ihre Einteilung in Bereiche.
- Figur 6: den schematischen Aufbau eines ersten Kommunikationssystems und eines zweiten Kommunikationssystems.
- Figur 7: eine Anwendung eines ersten und zweiten Kommunikationssystems zur verhaltensbasierten Authentifizierung gemäß einer Ausführungsform.
- Figur 8: das Generieren eines Klassifikationsergebnisses aus Zwischenergebnissen.

Elemente der nachfolgenden Ausführungsformen, die einander entsprechen, werden mit denselben Bezugszeichen gekennzeichnet.

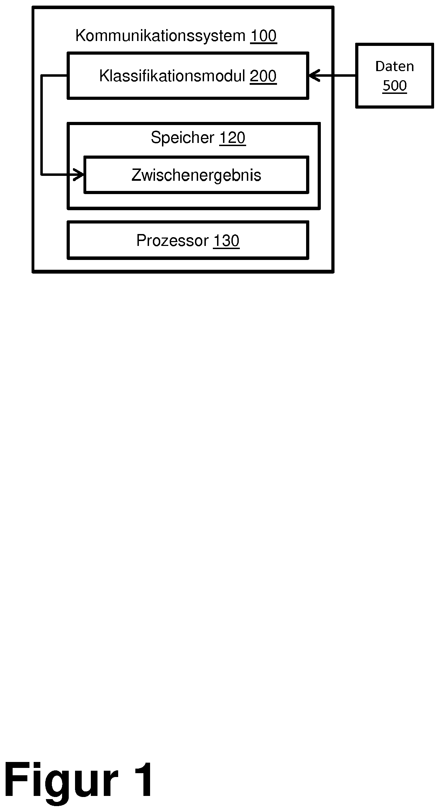

Figur 1 zeigt den schematischen Aufbau eines Kommunikationssystems 100. Das Kommunikationssystem 100 umfasst ein Klassifikationsmodul 200, einen Speicher 120 sowie einen Prozessor 130. Daten 500 werden erfasst und in das Klassifikationsmodul 200 eingegeben. Das Erfassen der Daten 500 unterscheidet sich je nach Art der Daten 500. Die Pulsfrequenz und der Blutdruck werden beispielsweise mittels eines Drucksensors erfasst. Grobmotorische Bewegungsdaten werden beispielsweise mittels eines Sensors zur Erfassung von grobmotorischen Bewegungen erfasst. Dieser kann beispielsweise als Gyroskop und/oder Beschleunigungssensor ausgebildet sein. Feinmotorische Bewegungsdaten werden beispielsweise mittels einer Mensch-Maschine-Schnittstelle erfasst. Diese kann beispielsweise als Touchscreen und/oder Tastatur oder im Falle des zuvor genannten Zitterns als Gyroskop ausgebildet sein. Anwendungsdaten werden mittels entsprechenden Anwendungen und/oder geeigneten Sensoren erfasst. Beispielsweise können durch das Anwendungsnutzungsverhalten selbst Daten 500 generiert werden, ferner können beispielsweise Fotos des Nutzers durch einen Charge-Coupled-Device erfasst und biometrische Daten des Nutzers extrahiert werden.

Beispielsweise könnte ein Foto des Nutzers Daten bezüglich des Erscheinungsbilds der Gesichtshaut und/oder des Schweißflusses umfassen. In einem weiteren Beispiel wird aus der Tippgeschwindigkeit des Nutzers, dem Lidstand der Augen und insbesondere der Kombination aus beidem, ein Wert errechnet, welcher die Müdigkeit des Nutzers quantifiziert und einen entspannten und/oder beruhigten Zustand des Nutzers identifiziert.

Die Daten 500 werden in das Klassifikationsmodul 200 eingegeben. Das Klassifikationsmodul 200 generiert aus den Daten 500 ein Zwischenergebnis. Dabei wird das Klassifikationsmodul 200 mittels des Prozessors 130 ausgeführt. Das Zwischenergebnis wird in Ausführungsformen in dem Speicher 120 gespeichert und steht dort für einen Ausleseprozess bereit.

Das in Figur 1 dargestellte Kommunikationssystem 100 umfasst ein einzelnes Kommunikationsgerät. Nach Ausführungsformen kann das Kommunikationssystem 100 auch mehrere Geräte umfassen. Das Kommunikationssystem kann beispielsweise, ohne darauf beschränkt zu sein, eine beliebige Kombination aus einer Smart-Watch, Smart-Glasses, einem Smartphone, einem Handheld, einem Tablet, einem Personal Digital Assistant, einem Pager, einem Navigationsgerät, einem Activity Tracker oder einem Gerät zur Erfassung medizinischer Daten umfassen.

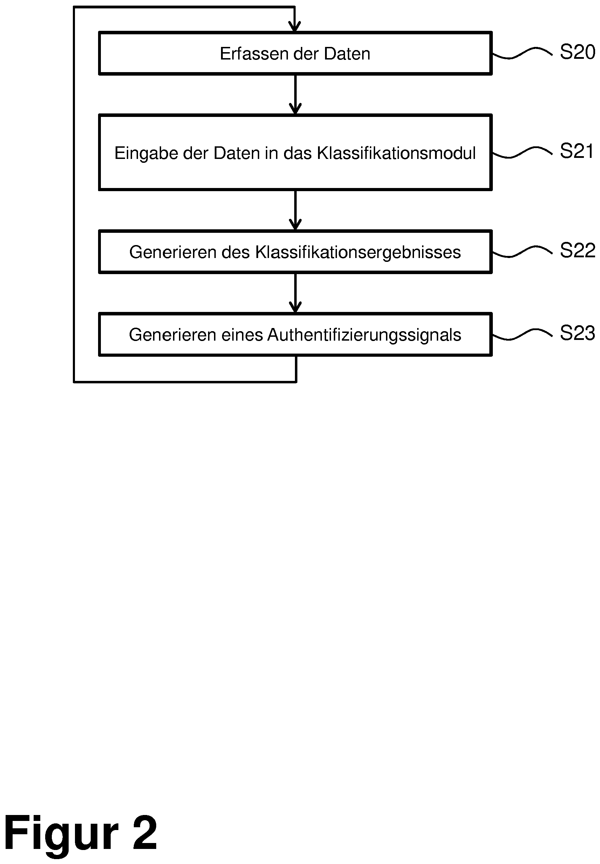

Figur 2 zeigt einen schematischen Ablauf einer Authentifizierung in einem Ablaufdiagramm. In Schritt S20 werden die Daten 500 durch einen Sensor und/oder eine Anwendung erfasst. Auf das Erfassen der Daten 500 (S20) folgt eine Eingabe der Daten 500 in das Klassifikationsmodul 200 (S21). Aus den Daten 500 generiert das Klassifikationsmodul 200 ein Klassifikationsergebnis 600 (S22).

In weiteren Ausführungsformen umfasst das Generieren des Klassifikationsergebnisses 600 (S22) ein Vergleichen der Daten 500 mit einem Vergleichsdatensatz. Der Vergleich wird beispielsweise hinsichtlich einer Mehrzahl von Vergleichsparametern durchgeführt. Auf das Generieren des Klassifikationsergebnisses hin, wird schließlich ein Authentifizierungssignal generiert (S23). Nach Ausführungsformen werden die Schritte S20, S21, S22 und S23 parallel zueinander mit kontinuierlich erfassten Daten ausgeführt, welche kontinuierlich zu einem Klassifikationsergebnis 600 verarbeitet und gespeichert werden.

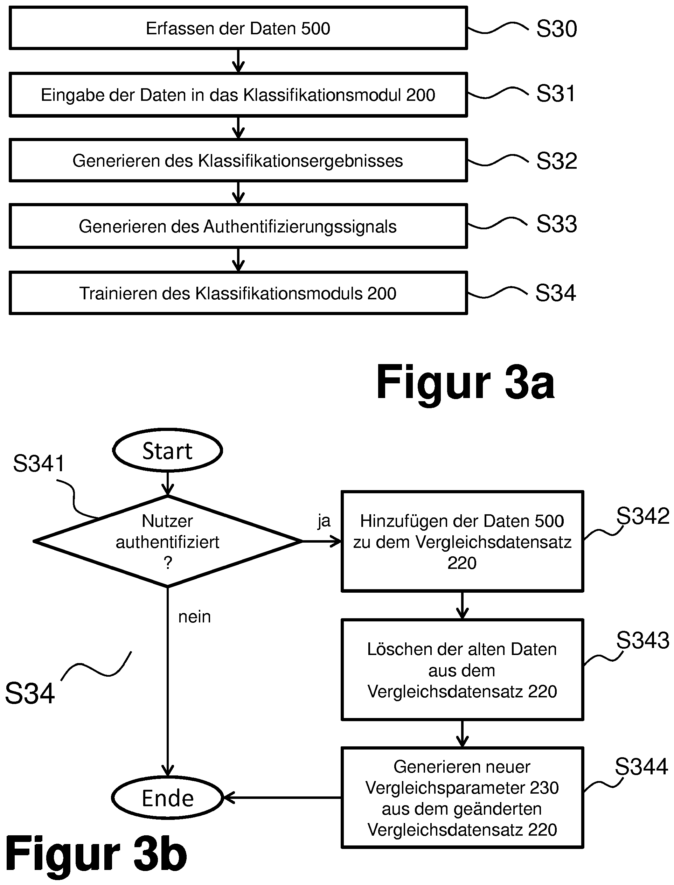

Figur 3a zeigt Schritte einer verhaltensbasierten Authentifizierung gemäß einer Ausführungsform in einem Ablaufdiagramm. In Schritt S30 werden die Daten 500 durch einen Sensor und/oder eine Anwendung erfasst. Auf das Erfassen der Daten 500 (S30) folgt eine Eingabe der Daten 500 in das Klassifikationsmodul 200 (S31). Aus den Daten 500 generiert das Klassifikationsmodul 200 ein Klassifikationsergebnis 600 (S32).

In weiteren Ausführungsformen umfasst das Generieren des Klassifikationsergebnisses 600 (S32) ein Vergleichen der Daten 500 mit einem Vergleichsdatensatz. Der Vergleich wird beispielsweise hinsichtlich einer Mehrzahl von Vergleichsparametern durchgeführt. Nach Ausführungsformen laufen die Schritte S30, S31 und S32 parallel zueinander ab, sodass kontinuierlich Daten 500 erfasst werden, welche kontinuierlich zu Klassifikationsergebnissen verarbeitet werden.

In Schritt S33 wird das Klassifikationsergebnis 600 ausgewertet und ein Authentifizierungssignal generiert. Das Authentifizierungssignal umfasst dabei das Ergebnis der Auswertung des Klassifikationsergebnisses 600. Gemäß einer Ausführungsform erfolgt auf eine erfolgreiche Authentifizierung des Nutzers hin ein Trainieren des Klassifikationsmoduls 200 (S34).

Das Trainieren des Klassifikationsmoduls 200 umfasst ein Hinzufügen der in Schritt S30 erfassten Daten 500 zu dem Vergleichsdatensatz 220, welcher in Schritt S32 genutzt wurde, um das Klassifikationsergebnis 600 zu generieren. Das Trainieren des Klassifikationsmoduls S34 ist detaillierter in Figur 3b dargestellt.

Figur 3b zeigt das Trainieren des Klassifikationsmoduls S34 als Ablaufdiagramm. Zunächst wird überprüft, ob sich der Nutzer erfolgreich authentifizieren konnte S341. Ist die Authentifizierung nicht erfolgreich und der Nutzer somit nicht authentifiziert, so findet kein weiteres Training des Klassifikationsmoduls 200 statt. Konnte der Nutzer authentifiziert werden, so werden zunächst die in S30 erfassten Daten 500 dem entsprechenden Vergleichsdatensatz 220 hinzugefügt S342.

Um das Hinzufügen der Daten 500 zu dem entsprechenden Vergleichsdatensatz 220 zu ermöglichen, weisen die Daten 500 und der Vergleichsdatensatz 220 gemäß einer Ausführungsform eine gleiche Struktur auf. Mit Struktur ist hier das Format der Daten gemeint. Beispielsweise umfassen sowohl die Daten 500 als auch der Vergleichsdatensatz 220 eine Mehrzahl von Werten in Form von Gleitkommazahlen oder ganzen Zahlen. Der Vergleichsdatensatz 220 kann sich gemäß einer weiteren Ausführungsform aus einer Mehrzahl von Daten 500 zusammensetzen, welche zusammen einen Datensatz bilden. Dadurch umfasst der Vergleichsdatensatz 220 automatisch die gleiche Struktur wie die Daten 500, solange sich das Format der erfassten Daten 500 nicht ändert.

Wurden die Daten 500 dem Vergleichsdatensatz 220 hinzugefügt, so wird der Vergleichsdatensatz 220 nach Daten 500 durchsucht, welche ein vordefiniertes Alter erreicht haben. Die gefundenen Daten 500 werden gemäß einer weiteren Ausführungsform aus dem Vergleichsdatensatz 220 gelöscht (S343). Die Reihenfolge der Schritte S342 und S343 ist dabei austauschbar.

Da sich der Vergleichsdatensatz 220 durch das Hinzufügen von Daten 500 und gegebenenfalls durch das Löschen von Daten 500 geändert hat, werden die Vergleichsparameter 230, welche zu dem Generieren des Klassifikationsergebnisses 600 in Schritt S32 beitragen, neu berechnet, um bei einem zukünftigen Authentifizierungsversuch zur Verfügung zu stehen.

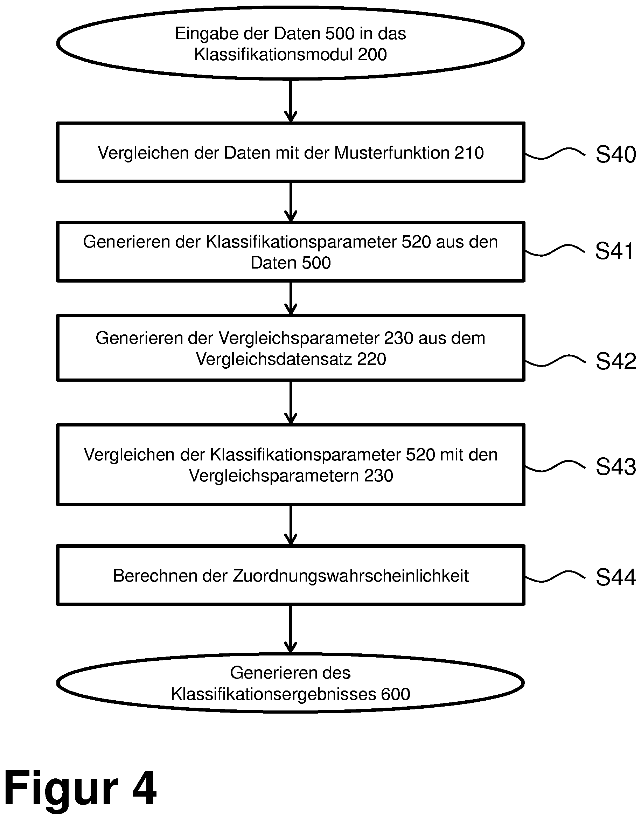

Figur 4 zeigt schematische Schritte der verhaltensbasierten Authentifizierung zur Verarbeitung von Daten gemäß einer Ausführungsform in einem Ablaufdiagramm. Insbesondere Teile des Schritts des Generierens des Klassifikationsergebnisses 600 (vgl. Figur 3a, S32) sind hier dargestellt. Der Prozess startet mit der Eingabe der Daten 500 in das Klassifikationsmodul 200.
Die Daten 500 werden in Schritt S40 zunächst mit einer Musterfunktion 210 verglichen. Das Vergleichen umfasst ein Fitten der Daten 500 unter Verwendung der Musterfunktion 210. Dieser Schritt wird dabei für eine Auswahl an Parametern durchgeführt, deren Verlauf durch eine Funktion charakterisiert werden kann. Parameter, bei denen dies nicht gegeben ist, beispielsweise die Pulsfrequenz oder die Tippgeschwindigkeit, durchlaufen diesen Schritt nicht. Die Daten 500 werden daraufhin Klassifikationsparametern 520 zugeordnet S41.

Das Bestimmen, welche Parameter für das weitere Verfahren als Klassifikationsparameter verwendet werden bzw. welche Werte diese Klassifikationsparameter aufweisen, ist in Schritt S42 dargestellt. In Schritt S43 werden nun die bestimmten Klassifikationsparameter 520 mit Vergleichsparametern 230 verglichen. Die Vergleichsparameter 230 wurden gemäß einer Ausführungsform analog zu dem Trainingsprozess (dargestellt in Figur 3b) aus älteren Daten berechnet.

Die Differenz zwischen den jeweiligen Klassifikationsparametern 520 und den entsprechenden Vergleichsparametern 230 sagt aus, wie gut die Klassifikationsparameter 520 mit den Vergleichsparametern 230 übereinstimmen. Damit lassen sich die erfassten Daten 500 mit den Daten des jeweiligen Vergleichsdatensatzes vergleichen, was im übertragenen Sinne ein Vergleich des Verhaltens des Nutzers mit dem Verhalten eines registrierten Nutzers bzw. dem Verhalten eines Nutzers mit einem bestimmten emotionalen Zustand bedeutet.

Auf Basis des Vergleichs der Klassifikationsparameter 520 mit den Vergleichsparametern 230 lässt sich eine Aussage treffen, wie hoch die Wahrscheinlichkeit ist, dass der Nutzer und der registrierte Nutzer dieselbe Person sind bzw. dass der Nutzer einen bestimmten emotionalen Zustand aufweist. Diese Wahrscheinlichkeit wird durch die Zuordnungswahrscheinlichkeit ausgedrückt, welche in Schritt S44 berechnet wird. Schließlich wird das Klassifikationsergebnis 600 gespeichert.

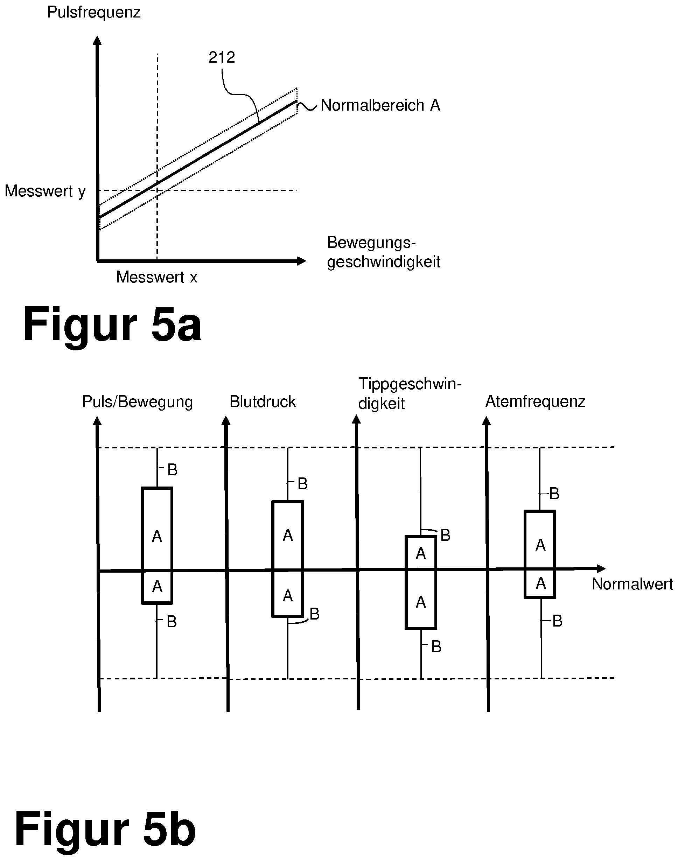

Figur 5a und Figur 5b zeigen beispielhafte Parameter und ihre Einteilung.

In Figur 5a ist schematisch ein Diagramm dargestellt, welches die Pulsfrequenz des Nutzers in Abhängigkeit von der Bewegungsgeschwindigkeit darstellt. Der Puls kann beispielsweise mittels eines Drucksensors erfasst werden, welcher an einer geeigneten Stelle getragen wird. Eine solche Stelle kann beispielsweise das Handgelenk, den Hals oder die Schläfe umfassen. Die Bewegungsgeschwindigkeit kann beispielsweise, ohne darauf beschränkt zu sein, aus den physiologischen Parametern von grobmotorischen Bewegungen, insbesondere der Schrittlänge des Nutzers, bestimmt werden oder aus den Positionsdaten des Kommunikationssystems ermittelt werden. Die Positionsdaten umfassen beispielsweise die Positionsdaten eines GPS- oder Galileo-Signals oder werden aus umliegenden WLAN-Signalen ermittelt.

Typischerweise steigt die Pulsfrequenz mit wachsender Bewegungsgeschwindigkeit an. In Ausführungsformen wird die Pulsfrequenz im Verhältnis zur Bewegungsintensität betrachtet. Das in Figur 5a dargestellte lineare Verhältnis zwischen Pulsfrequenz und Bewegungsgeschwindigkeit dient hier lediglich der Erläuterung und erhebt keinen Anspruch auf Korrektheit. Das Diagramm dient der Veranschaulichung, dass die Pulsfrequenz mit der Bewegungsgeschwindigkeit ansteigt.

In der Mitte des Diagramms ist der Normalwert 212 der Pulsfrequenz (durchgezogene Linie) dargestellt. Um den Normalwert 212 erstreckt sich der Normalbereich A. Der Normalbereich A richtet sich nach den erfassten Messdaten in einem Referenzzustand. In einer Ausführungsform wird der Normalbereich A in einem Kalibrierungsverfahren durch den Nutzer bestimmt, indem sich der Nutzer im Referenzzustand befindet und die Daten des entsprechenden Parameters erfasst werden. Wird beispielsweise die Pulsfrequenz im Verhältnis zu einer Bewegung erfasst, wird der Nutzer aufgefordert sich zu bewegen, während der Puls gemessen wird. Die Daten werden erfasst und als Teil des Vergleichsdatensatzes gespeichert. In einer weiteren Ausführungsform ist der Normalbereich A durch Trainingsdatensätze einer Nutzerkohorte bestimmt. Der Parameter, dessen Normalbereich A bestimmt werden soll, wird für eine Mehrzahl von Personen erfasst. Aus den erfassten Daten aller Trainingspersonen wird der Normalbereich A generiert.

Aus den Messwerten des Normalbereichs A wird der Normalwert 212 des Nutzers generiert. Das Generieren des Normalwerts 212 kann beispielsweise die Bildung eines Mittelwerts, eines Medians oder eines Modalwertes umfassen. Die Grenzen des Normalbereichs A können symmetrisch um den Normalwert 212 verteilt sein, wie in Figur 5A dargestellt. Die Grenzen des Normalbereichs A können ferner auch asymmetrisch um den Normalwert 212 verteilt sein (siehe unten, Figur 5b). In einer Ausführungsform werden die Grenzen des Normalbereichs A aus den Fehlerwerten des Normalwerts 212 bestimmt.

Befindet sich ein Parameter außerhalb des Normalbereichs A, so sucht das Klassifikationsmodul nach emotionalen Zuständen, welche eine entsprechende Abweichung des Parameters von dem Normalwert 212 aufweisen. Kann ein solcher emotionaler Zustand gefunden werden, so wird der emotionale Zustand dem Nutzer zugeordnet.

Ein euphorisierter Zustand umfasst beispielsweise einen oder mehrere Parameter außerhalb des Normalbereichs A. So sind beispielsweise der Puls einer euphorisierten Person erhöht und das Bewegungsmuster zeigt einen schwungvolleren Gang, was durch einen Parameter des Fits einer entsprechenden Fitfunktion dargestellt wird.

Zusammen mit den Daten einer grobmotorischen Bewegung kann der erhöhte Puls als euphorisierter Zustand klassifiziert werden. Ist die Pulsfrequenz erhöht, ohne dass sich der Nutzer "beschwingt" bewegt, so deutet dies beispielsweise darauf hin, dass ein anderer emotionaler Zustand vorliegt, beispielsweise erregt. Um diesen Unterschied klassifizieren zu können, werden beispielsweise die Pulsfrequenz über der Bewegungsgeschwindigkeit als ein Parameter erfasst.

Um dies zu verdeutlichen zeigt Figur 5a die gemessene Pulsfrequenz (waagrechte, gestrichelte Linie, Messwert y). Betrachtet man die gemessene Pulsfrequenz im Vergleich zum Ruhepuls (y-Achsenabschnitt des Normalwertes 212), so liegt die gemessene Pulsfrequenz in dem Bereich B. Das Klassifikationsmodul vergleicht die erfasste Pulsfrequenz auch mit dem Normalwert 212 der entsprechenden Bewegungsgeschwindigkeit (senkrechte, gestrichelte Linie, Messwert x). Unter Berücksichtigung der Bewegungsgeschwindigkeit befindet sich die erfasste Pulsfrequenz in dem Normalbereich A. Somit würden beispielsweise die erhöhte Pulsfrequenz und die erhöhte Bewegungsgeschwindigkeit auf einen euphorisierten Zustand hindeuten.

Ferner kann beispielsweise auch eine relativ starke Änderung eines Parameters in einem relativ kurzen Zeitraum eine Klassifikation des emotionalen Zustandes zur Folge haben. Beispielsweise, wenn der Blutdruck innerhalb weniger Sekunden rapide steigt, oder die Pulsfrequenz in einem kurzen Zeitraum, wie etwa wenige Sekunden, auf einen für den Nutzer hohen Wert ansteigt, kann beispielsweise auf einen Wutanfall hindeuten.

In der Realität bestimmen viele Parameter gemeinsam den emotionalen Zustand eines Nutzers. Diese Parameter wechselwirken teilweise miteinander, sodass sie allein für sich genommen eine relativ geringe Aussagekraft besitzen. In Ausführungsformen wird deshalb eine Mehrzahl von Parametern als Daten erfasst. Die Parameter selbst und/oder die Kombination der Parameter untereinander werden dann in das Klassifikationsmodul eingegeben. Die Anzahl Kombinationen der einzelnen Parameter, die nötig sind, um einen emotionalen Zustand zu klassifizieren geht über das Darstellungsvermögen eines zweidimensionalen Schaubildes hinaus. Das hier dargestellte Beispiel soll lediglich das Prinzip eine Klassifikation veranschaulichen. Figur 5b zeigt beispielhaft vier solcher Parameter.

Die einzelnen Parameter bzw. ihre Korrelationen können unterschiedliche Bereiche A und B aufweisen, wobei die Grenzen zwischen den einzelnen Bereichen jeweils symmetrisch oder antisymmetrisch sein können. In Ausführungsformen wird das Ergebnis der Einteilung der Parameter in die Bereiche A und B in das Klassifikationsmodul eingegeben. Beispielsweise würde eine Puls- zu Bewegung-Verhältnis im oberen Normalbereich A, ein Blutdruck im unteren Normalbereich A, eine Tippgeschwindigkeit im oberen Bereich B und eine Atemfrequenz im oberen Normalbereich A erfasst werden. Durch die Eingabe dieser Werte könnte beispielsweise der emotionale Zustand als "leicht angespannt" oder "hektisch" klassifiziert werden.

In einer weiteren Ausführungsform werden die Werte der Parameter direkt in das Klassifikationsmodul eingegeben. Um die Genauigkeit der Klassifikation zu erhöhen, kann aus den Parametern direkt die Zuordnungswahrscheinlichkeit bestimmt werden. Beispielsweise kann ein erster emotionaler Zustand dadurch klassifiziert werden, dass der Wert eines der Parameter in einem kleinen ersten Bereich außerhalb des Normalbereichs A liegt und ein zweiter emotionaler Zustand dadurch klassifiziert werden, dass der Wert in einem kleinen zweiten Bereich außerhalb des Normalbereichs A liegt. Dem ersten und dem zweiten Bereich sind dabei unterschiedliche Grenzen zugeordnet, wobei sich die beiden Bereiche teilweise überlappen können. Die Pulsfrequenz kann beispielsweise einen Normalwert von 70 Schläge pro Minute (bpm) umfassen. Der Normalbereich sei somit von 65bpm bis 75bpm festgelegt. Nun können beispielsweise außerhalb des Normalbereichs A ein oder mehrere Bereiche verschiedenen emotionalen Zuständen zugeordnet sein. Bei einer Pulsfrequenz von beispielsweise 75 bpm bis 80 bpm kann zum Beispiel der emotionale Zustand als "leicht erregt" klassifiziert werden. Bei einer Pulsfrequenz von 80 bpm bis 90 bpm hingegen würde das Klassifikationsergebnis zum Beispiel "euphorisch" umfassen.

Überlappen zwei Bereiche einander, zum Beispiel, weil "leicht erregt" von 75 bpm bis 85 bpm definiert ist und "euphorisch" von 80 bpm bis 90 bpm reicht, so kann aufgrund des entsprechenden Parameters, in diesem Fall eine Pulsfrequenz von beispielsweise 82 bpm, keine eindeutige Aussage über den emotionalen Zustand getroffen werden, da der Wert des Parameters in dem Überlappbereich liegt. In Ausführungsformen wird die Mehrdeutigkeit durch eine Betrachtung eines oder mehrerer Parameter aufgelöst, sodass eine eindeutige Aussage über den emotionalen Zustand getroffen werden kann. In einer weiteren Ausführungsform wird die Klassifikation des emotionalen Zustandes durch das Bilden einer Mahalanobis-Distanz, einer Euklidischen Distanz und/oder mittels eines Maschinenlernverfahrens bestimmt.
Die Überwachung des Körpers und das permanente Klassifizieren des emotionalen Zustandes kann ferner in vorteilhafter Weise zu einer Früherkennung von Depressionen beitragen. Die kontinuierlich bzw. regelmäßig erfassten Daten können Indizien dafür umfassen und beispielsweise einen Arzt oder einen Psychologen bei einer Untersuchung bei der Diagnose unterstützen.

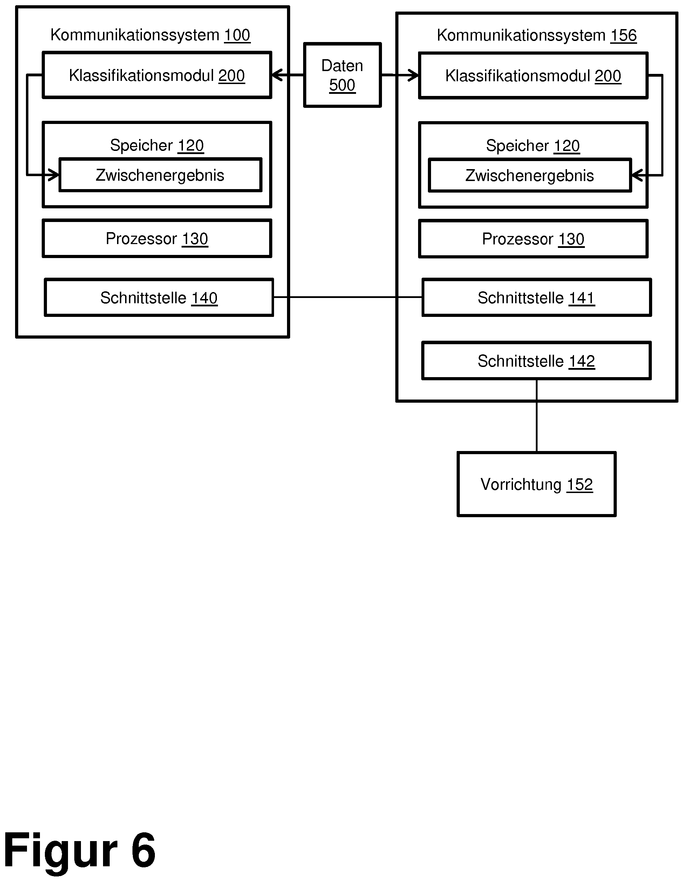

Figur 6 zeigt eine Ausführungsform der Erfindung, welche ein erstes Kommunikationssystem 100 und ein zweites Kommunikationssystem 156 umfasst. Die Kommunikationssysteme 100, 156 sind schematisch dargestellt.

Das erste Kommunikationssystem 100 umfasst ein Klassifikationsmodul 200, einen Speicher 120, einen Prozessor 130 sowie eine erste Schnittstelle 140. Das zweite Kommunikationssystem 156 umfasst ebenfalls einen Speicher 120, einen Prozessor 130, eine zweite Schnittstelle 141 sowie eine dritte Schnittstelle 142.

Das erste Kommunikationssystem 100 ist dazu konfiguriert, über die erste Schnittstelle 140 mit dem zweiten Kommunikationssystem 156 zu kommunizieren, wobei das zweite Kommunikationssystem 156 dazu konfiguriert ist, über die zweite Schnittstelle 141 mit dem ersten Kommunikationssystem 100 zu kommunizieren. Ferner ist das zweite Kommunikationssystem 100 über die dritte Schnittstelle 142 mit einer Vorrichtung 152 kommunikativ verbunden.

Das erste Kommunikationssystem 100 und das zweite Kommunikationssystem 156 erfassen jeweils Daten 500 mittels geeigneter Sensoren oder Anwendungen. Die Daten 500 werden sodann in die Klassifikationsmodule 200 eingegeben, welche die Daten 500 zu Zwischenergebnissen verarbeiten. Die Zwischenergebnisse werden dann in den jeweiligen Speichern 120 gespeichert. Die Klassifikationsmodule 200 werden von den jeweiligen Prozessoren 130 ausgeführt.

Die Daten 500, die das erste Kommunikationssystem 100 erfasst, können andere Daten sein, als die, die durch das zweite Kommunikationssystem 156 erfasst werden. Beispielsweise, ohne darauf beschränkt zu sein, kann das erste Kommunikationssystem 100 eine grobmotorische Bewegung erfassen, während das zweite Kommunikationssystem 156 biometrische Daten, zum Beispiel das Gewicht oder einen Fingerabdruck des Nutzers, erfasst.

Die Zwischenergebnisse, welche in dem Speicher 120 des ersten Kommunikationssystems 100 gespeichert sind, werden für ein Ausführen des Verfahrens zur verhaltensbasierten Authentifizierung über die erste Schnittstelle 140 an das zweite Kommunikationssystem 156 gesendet. Unter Verwendung aller dem zweiten Kommunikationssystem 156 zur Verfügung stehenden Zwischenergebnisse generiert das zweite Kommunikationssystem 156 das Klassifikationsergebnis 600. In einer Ausführungsform umfasst das erste Kommunikationssystem 100 kein Klassifikationsmodul 200. Es erfasst die Daten 500 und sendet diese für die weitere Verarbeitung an das zweite Kommunikationssystem 156. In einer weiteren Ausführungsform erfasst das zweite Kommunikationssystem 156 keine Daten 500. Gemäß dieser Ausführungsform werden alle Daten 500 für die verhaltensbasierte Authentifizierung durch das erste Kommunikationssystem 100 erfasst.

Die erste Schnittstelle 140 und die zweite Schnittstelle 141 umfassen Drahtloskommunikationsschnittstellen. Das erste Kommunikationssystem 100 und das zweite Kommunikationssystem 156 können nach Ausführungsformen zum Beispiel über WLAN, RFID, NFC, Funk oder Bluetooth miteinander kommunizieren. Nach weiteren Ausführungsformen ist die Kommunikation zwischen dem ersten Kommunikationssystem 100 und dem zweiten Kommunikationssystem 156 eine kryptografisch gesicherte Kommunikation. Kryptografisch gesichert bedeutet in diesem Zusammenhang eine symmetrische oder asymmetrische Verschlüsselung und/oder eine Kommunikation auf Basis eines Austauschs von Zertifikaten.

Nach der Auswertung des Klassifikationsergebnisses steuert das zweite Kommunikationssystem 156 die Vorrichtung 152 über die dritte Schnittstelle 142 an. Die dritte Schnittstelle 142 kann nach Ausführungsformen eine Drahtloskommunikationsschnittstelle, analog zu der zweiten Schnittstelle 141, oder eine Alternative umfassen. Nach Ausführungsformen umfasst die dritte Schnittstelle eine kabelgebundene Schnittstelle oder eine Vorrichtung für einen Kontakt mit einer Leiterbahn.

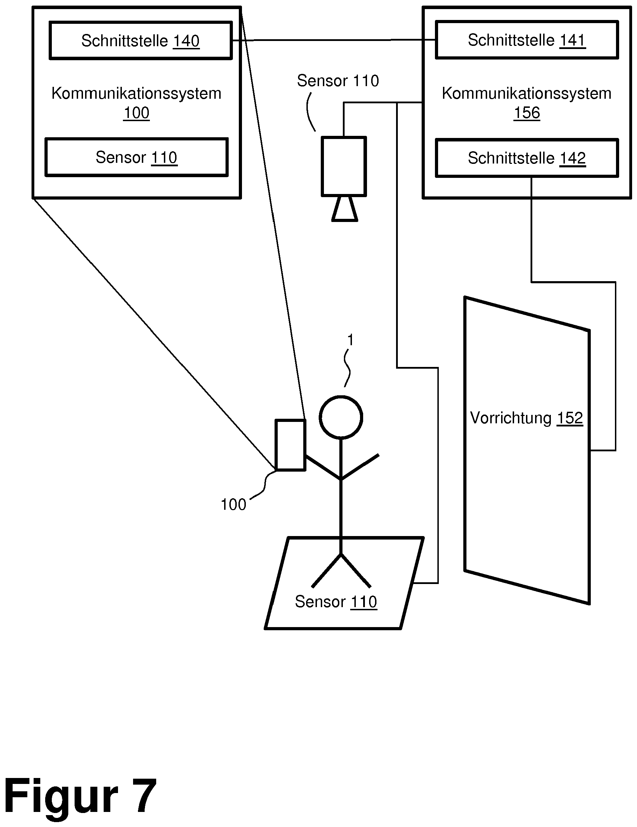

Die Vorrichtung 152 kann nach Ausführungsformen ein Schließmittel, ein Fahrzeug oder ein beliebiges System umfassen, welches einer Authentifizierung des Nutzers bedarf. Eine konkrete Ausführungsform der Erfindung ist in Figur 7 dargestellt.

Figur 7 zeigt eine Ausführungsform der Erfindung, wobei die Ausführungsform schematisch dargestellt ist. Das System zur Anwendung des Verfahrens der verhaltensbasierten Authentifizierung umfasst ein erstes Kommunikationssystem 100, welches von dem Nutzer 1 mitgeführt wird, und ein zweites Kommunikationssystem 156, welches kommunikativ mit einer Vorrichtung 152 verbunden ist.

Das erste Kommunikationssystem 100 umfasst neben den in Figur 6 beschriebenen Komponenten einen Sensor 110 und ist über die erste Schnittstelle 140 mit dem zweiten Kommunikationssystem 156 kommunikativ verbunden. Das zweite Kommunikationssystem 156 umfasst neben den in Figur 6 beschriebenen Komponenten zwei Sensoren 110 und ist über die zweite Schnittstelle 141 mit dem ersten Kommunikationssystem 100 kommunikativ verbunden sowie über die dritte Schnittstelle 142 mit der Vorrichtung 152 kommunikativ verbunden.

Die Vorrichtung 152 ist in dieser Ausführungsform als Tür ausgebildet, welche sich nur für berechtigte bzw. autorisierte Personen öffnet. Eine solche Tür könnte beispielsweise den Zugang zu einem Fußballstadion kontrollieren, in welches nur nicht-aggressive Fans eintritt erlangen. Die Tür öffnet sich nur dann, wenn der Nutzer 1 sich gegenüber dem zweiten Kommunikationssystem 156 erfolgreich authentifiziert hat, er also der Identität eines registrierten Nutzers - beispielsweise einem Abonnenten eines Platzes in einem Stadion oder einem registrierten Kunden - und einem nicht-aggressivem Zustand zugeordnet werden konnte.

Zur Durchführung der verhaltensbasierten Authentifizierung werden in dieser Ausführungsform insgesamt drei Sensoren 110 verwendet. Andere Ausführungsformen umfassen eine beliebige Anzahl von Sensoren. Der von dem ersten Kommunikationssystem 100 umfasste Sensor 110 ist beispielsweise als Beschleunigungssensor ausgebildet und erfasst eine grobmotorische Bewegung des Nutzers 1. Der erste Sensor 110 des zweiten Kommunikationssystems ist als Kamera ausgebildet und ist so montiert, dass er das Gesicht des Nutzers 1 erfassen kann. Der zweite Sensor 110 des zweiten Kommunikationssystems 156 ist als Gewichtssensor in Form einer Platte im Boden eingelassen.

Während seiner alltäglichen Tätigkeit bewegt sich der Nutzer 1, wodurch der Beschleunigungssensor die Gangart des Nutzers 1 erfasst. Das erste Kommunikationssystem 100 generiert im Laufe des Tages immer wieder aus den grobmotorischen Bewegungsdaten Zwischenergebnisse und speichert diese. Möchte der Nutzer 1 nun Zutritt zu dem hinter der Vorrichtung 152 befindlichen Bereich, so muss er sich authentifizieren. Dazu stellt er sich auf die Platte, welche als Gewichtssensor ausgebildet ist. Nachdem das erste Kommunikationssystem 100 und das zweite Kommunikationssystem 156 eine kommunikative Verbindung untereinander aufgebaut haben, sendet das erste Kommunikationssystem 100 die im Laufe des Tages gespeicherten Zwischenergebnisse an das zweite Kommunikationssystem 156. Das zweite Kommunikationssystem 156 erfasst das Gewicht des Nutzers 1 mittels des Gewichtssensors und eines oder mehrere der biometrischen Merkmale des Gesichts des Nutzers.

Die Zwischenergebnisse des ersten Kommunikationssystems 100 und das Zwischenergebnis der Anwendungsdaten (biometrischen Daten), erfasst durch den Gewichtssensor und die Kamera, werden zusammen verwendet, um ein Klassifikationsergebnis 600 zu generieren. Dieses Klassifikationsergebnis 600 wird zur Authentifizierung verwendet. Ist der Nutzer als ein registrierter Nutzer identifiziert und wurde ihm ein zulässiger emotionaler Zustand zugeordnet, so steuert das zweite Kommunikationssystem 156 die Vorrichtung 152 an und die Tür öffnet sich. Konnte der Nutzer nicht authentifiziert werden, beispielsweise weil nicht genügend biometrische Merkmale des Nutzers durch die Kamera erfasst wurden, so wird die Tür verriegelt. In einer weiteren Ausführungsform umfasst das zweite Kommunikationssystem 156 einen Touchscreen, auf dem ein Wort und eine virtuelle Tastatur angezeigt werden. Der Nutzer muss das Wort eingeben, wodurch das zweite Kommunikationssystem 156 Daten einer feinmotorischen Bewegung des Nutzers erfasst. Die feinmotorischen Bewegungsdaten werden ebenfalls verwendet, um ein Klassifikationsergebnis 600 zu generieren oder die vorherige Generierung des Klassifikationsergebnisses wird wiederholt, wobei die feinmotorischen Bewegungsdaten die unvollständigen bzw. mangelhaften biometrischen Daten ersetzen.

Diese Ausführungsform eignet sich insbesondere als Zutrittskontrollsystem eines Zugangs, welcher einen hohen Personenverkehr aufweist. Nähert sich ein Nutzer dem Zugang, verbindet sich sein erstes Kommunikationssystem mit dem zweiten Kommunikationssystem. Während des Gehens erfassen die Kamera und der Gewichtssensor die biometrischen Daten des Nutzers und er kann, ohne selbst mit dem zweiten Kommunikationssystem aktiv interagieren zu müssen, den Zugang passieren. Schlägt jedoch die Authentifizierung fehl, so bietet der optionale Touchscreen eine zweite Möglichkeit für den Nutzer, den Zugang dennoch zu nutzen ohne ein Passwort kennen zu müssen, indem das zweite Kommunikationssystem die feinmotorische Bewegung des Nutzers als Grundlage einer Authentifizierung verwendet.

Hat beispielsweise ein Dieb dem eigentlichen Nutzer das erste Kommunikationssystem 100 entwendet und versucht nun Zutritt zu dem durch die Vorrichtung 152 gesperrten Bereich zu erlangen, so müsste der Dieb die Gangart des eigentlichen Nutzers nachahmen, sein Gewicht an das des eigentlichen Nutzers anpassen und ebenso sein Gesicht. Die Kriterien zu erfüllen ist für jedes dieser drei Kriterien schwierig, was die Sicherheit des Verfahrens, insbesondere durch Kombination der drei Kriterien, steigert, ohne dass sich der Nutzer 1 ein Passwort merken muss. Ferner könnte beispielsweise ein weiterer Sensor den Puls des Nutzers messen. Der Dieb müsste beispielsweise dann nicht nur den Gang des eigentlichen Nutzers nachahmen, sondern auch seine Nervosität unterdrücken, die dadurch entsteht, dass er mit einem gestohlenen Kommunikationssystem versucht sich den Einlass zu erschleichen.
Kann der Nutzer gemäß einer Ausführungsform nicht authentifiziert werden, so sendet das zweite Kommunikationssystem aufgrund einer nicht erfolgreichen Authentifizierung ein Signal, welches entsprechendes Wachpersonal informiert oder ähnliche Maßnahmen einleitet, die dem Verdacht eines nicht authentifizierten bzw. nicht autorisierten Zutrittsversuchs angemessen sind. Die Zuordnungswahrscheinlichkeiten können dabei beispielsweise so niedrig liegen, dass sich das Verhalten des Nutzers in einem kurzen Zeitraum sehr stark ändern müsste, um in einem solchen Klassifikationsergebnis zu resultieren. Da dieser Fall sehr selten eintritt, ist der Verdacht einer unberechtigten Nutzung des ersten Kommunikationssystems berechtigt.

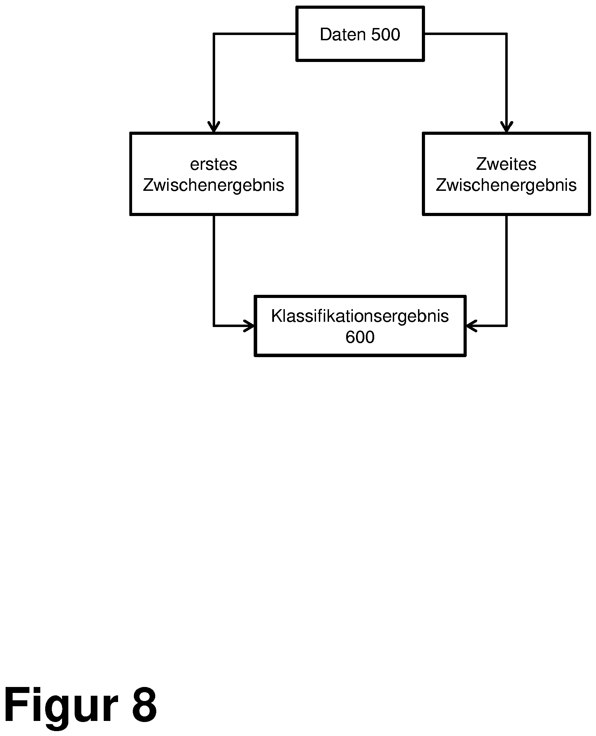

Figur 8 zeigt die schematische beispielhafte Zusammensetzung des Klassifikationsergebnisses 600. Die Daten 500 werden durch das erste Kommunikationssystem erfasst, worauf hin das erste Kommunikationssystem ein erstes Zwischenergebnis und ein zweites Zwischenergebnis verarbeitet.

Die Generierung des ersten Zwischenergebnisses umfasst ein Auswerten der Daten bezüglich der Identität eines registrierten Nutzers. Die Daten werden mit einem Vergleichsdatensatz verglichen, welcher das Verhalten eines registrierten Nutzers wiederspiegelt. Aus dem Ergebnis des Vergleichs wird eine Zuordnungswahrscheinlichkeit für die Zuordnung der Daten zu dem Vergleichsdatensatz generiert. Da die Daten dem aktuellen Nutzer zugeordnet werden und der Vergleichsdatensatz einer Identität eines registrierten Nutzers zugeordnet wird, kann der aktuelle Nutzer einer Identität eines registrierten Nutzers zugeordnet werden.

Die Generierung des zweiten Zwischenergebnisses umfasst ein Auswerten der Daten bezüglich einem zulässigen emotionalen Zustand. Die Daten werden mit einem Vergleichsdatensatz verglichen, welcher eine Auswahl von emotionalen Zuständen wiederspiegelt. Aus dem Ergebnis des Vergleichs wird eine Zuordnungswahrscheinlichkeit für die Zuordnung der Daten zu einem der Zustände aus der Auswahl von emotionalen Zuständen generiert. Da die Daten dem aktuellen emotionalen Zustand des Nutzers zugeordnet werden und er Vergleichsdatensatz der Auswahl von emotionalen Zuständen zugeordnet wird, kann der aktuelle Nutzer einem emotionalen Zustand zugeordnet werden.

Aus dem ersten Zwischenergebnis und dem zweiten Zwischenergebnis wird das Klassifikationsergebnis 600 generiert. In Abhängigkeit davon, wie die Authentifizierung ausgewertet wird, werden die Zwischenergebnisse miteinander kombiniert, um das Klassifikationsergebnis 600 zu generieren. Beispielsweise kann die Voraussetzung für eine erfolgreiche Authentifizierung eine korrekte Zuordnung des Nutzers zu der Identität eines registrierten Nutzers eine Zuordnungswahrscheinlichkeit für die Zuordnung des Nutzers zu einer Identität eines registrierten Nutzers von einem ersten Schwellenwert, beispielsweise 90%, umfassen. Ferner kann die erfolgreiche Authentifizierung die Zuordnungswahrscheinlichkeit der Zuordnung des emotionalen Zustandes von einem zweiten Schwellenwert, beispielsweise von 65% erfordern. Über ein Ändern der Schwellenwerte kann beispielsweise das Sicherheitskriterium für die jeweilige Zuordnung erhöht werden. Um einen höheren Schwellenwert zu erreichen muss beispielsweise die entsprechende Zuordnung genauer sein.

In einer weiteren Ausführungsform kann eine erfolgreiche Authentifizierung eine Gesamtklassifikation umfassen. Dazu werden die Zuordnungswahrscheinlichkeiten miteinander verrechnet. Das Verrechnen kann beispielsweise durch das Bilden eines Mittelwerts, eines Modalwerts oder eines Medians erfolgen. Ferner kann die Zuordnung selbst ein Erfordernis einer erfolgreichen Authentifizierung sein. Beispielsweise erfordert die erfolgreiche Authentifizierung das die mittlere Zuordnungswahrscheinlichkeit bei 80% liegt, das erste Zwischenergebnis den Nutzer einer Identität eines registrierten Nutzers zuordnet und den Nutzer einem nichterregten Zustand zuordnet.

### Bezugszeichenliste

- 1:: Nutzer
- 100:: Kommunikationssystem
- 120:: Speicher
- 130:: Prozessor
- 140:: Schnittstelle
- 141:: Schnittstelle
- 142:: Schnittstelle
- 152:: Vorrichtung
- 156:: Kommunikationssystem
- 200:: Klassifikationsmodul
- 210:: Musterfunktion
- 212:: Normalwert
- 220:: Vergleichsdatensatz
- 230:: Vergleichsparameter
- 500:: Daten
- 520:: Klassifikationsparameter
- 600:: Klassifikationsergebnis
- S20:: Erfassen der Daten
- S21:: Eingabe der Daten in das Klassifikationsmodul
- S22:: Generieren des Klassifikationsergebnisses
- S23:: Speichern des Klassifikationsergebnisses
- S30:: Erfassen der Daten
- S31:: Eingabe der Daten in das Klassifikationsmodul
- S32:: Generieren des Konfidenzwertes
- S33:: Speichern des Konfidenzwertes
- S34:: Trainieren des Klassifikationsmoduls
- S341:: Prüfen ob der Nutzer Authentifiziert ist
- S342:: Hinzufügen der Daten zu dem Vergleichsdatensatz
- S343:: Löschen der alten Daten
- S344:: Generieren neuer Vergleichsparameter
- S40:: Vergleichen der Daten
- S41:: Zuordnen der Klassifikationsparameter
- S42:: Bestimmen der Klassifikationsparameter
- S43:: Vergleichen der Klassifikationsparameter
- S44:: Generieren des Konfidenzwerts

## Patentansprüche

1. Verfahren zur Authentifizierung eines Nutzers (1) eines ersten Kommunikationssystems (100), wobei das erste Kommunikationssystem (100) ein mobiles, tragbares Kommunikationssystem umfasst, welches mindestens einen Sensor zur Erfassung von verhaltensbasierten Daten (500) des Nutzers (1), ein Klassifikationsmodul (200) und einen Prozessor (130) aufweist,
wobei das Klassifikationsmodul (200) für ein Klassifizieren der verhaltensbasierten Daten (500) konfiguriert ist, wobei das Klassifizieren ein Zuordnen der verhaltensbasierten Daten (500) zu einer Identität eines registrierten Nutzers umfasst,
wobei die verhaltensbasierten Daten des Nutzers (1) biometrische Daten einer grobmotorischen Bewegung umfassen und das Klassifikationsmodul (200) dazu trainiert ist, eine grobmotorische Bewegung zu erkennen, wobei der Sensor einen Bewegungssensor zur Erfassung von Bewegungen des ersten Kommunikationssystems (100) umfasst, welcher dazu konfiguriert ist, die Daten der grobmotorischen Bewegung des Nutzers (1) des ersten Kommunikationssystems (100) zu erfassen,
wobei das Klassifizieren ferner ein Zuordnen der verhaltensbasierten Daten (500) zu einem emotionalen Zustand aus einer Mehrzahl von emotionalen Zuständen umfasst,
wobei die Mehrzahl von emotionalen Zuständen eine Auswahl von für die Authentifizierung zulässiger emotionaler Zustände umfasst,
wobei das Klassifikationsmodul (200) durch den Prozessor (130) des ersten Kommunikationssystems (100) ausgeführt wird,
wobei das Verfahren die folgenden Schritte umfasst:
• Empfangen einer Authentifizierungsanfrage,
• Erfassen der Daten (500) durch den mindestens einen Sensor,
• Eingeben der verhaltensbasierten Daten (500) in das Klassifikationsmodul (200) und Generieren eines ersten Zwischenergebnisses und eines zweiten Zwischenergebnisses aus den verhaltensbasierten Daten (500) durch das Klassifikationsmodul (200),
• Generieren eines Klassifikationsergebnisses (600) unter Verwendung des ersten Zwischenergebnisses und des zweiten Zwischenergebnisses,
• Authentifizieren des Nutzers (1) unter Verwendung des Klassifikationsergebnisses (600),
• Generieren eines Authentifizierungssignals, wobei das Signal eine Information über das Ergebnis der Authentifizierung umfasst,
wobei das erste Zwischenergebnis eine Zuordnung des Nutzers (1) zu einer Identität eines registrierten Nutzers und die Angabe einer Zuordnungswahrscheinlichkeit umfasst, mit der dem Nutzer die Identität des registrierten Nutzers zugeordnet wird,
wobei das zweite Zwischenergebnis eine Zuordnung des Nutzers (1) zu einem emotionalen Zustand und die Angabe einer Zuordnungswahrscheinlichkeit umfasst, mit der dem Nutzer der emotionale Zustand zugeordnet wird,
wobei die Authentifizierung erfolgreich ist, wenn der Nutzer als ein berechtigter Nutzer identifiziert wird und dem Nutzer ein zulässiger emotionaler Zustand aus der Auswahl von zulässigen emotionalen Zuständen zugeordnet wird.

2. Verfahren nach Anspruch 1, wobei das erste Kommunikationssystem (100) ein Programm umfasst, wobei das Programm die Authentifizierungsanfrage sendet, um den Nutzer gegenüber dem ersten Kommunikationssystem (100) zu authentifizieren, wobei das erste Kommunikationssystem (100) dem Nutzer den Zugriff auf das Programm in Abhängigkeit von dem Authentifizierungssignal ermöglicht.

3. Verfahren nach Anspruch 1, wobei das erste Kommunikationssystem (100) mit einem zweiten Kommunikationssystem (156) kommunikativ verbunden ist, wobei das zweite Kommunikationssystem (156) die Authentifizierungsanfrage sendet, um den Nutzer gegenüber dem zweiten Kommunikationssystem (156) zu authentifizieren.

4. Verfahren nach Anspruch 3, wobei das erste Zwischenergebnis und das zweite Zwischenergebnis an das zweite Kommunikationssystem (156) gesendet werden, wobei das zweite Kommunikationssystem (156) verhaltensbasierten Daten (500) des Nutzers (1) erfasst und aus den durch das zweite Kommunikationssystem (156) erfassten verhaltensbasierten Daten (500) ein drittes Zwischenergebnis generiert, wobei das zweite Kommunikationssystem (156) das Klassifikationsergebnis (600)generiert, wobei für die Generierung des Klassifikationsergebnisses (600) ferner das dritte Zwischenergebnis verwendet wird.

5. Verfahren nach einem der vorherigen Ansprüche, wobei die Mehrzahl von emotionalen Zuständen durch Parameterbereiche definiert ist, welche aus verhaltensbasierten Daten (500) einer Nutzerkohorte berechnet wurden, und/oder
wobei die biometrischen Daten ferner Daten einer feinmotorischen Bewegung umfassen,
wobei das Klassifikationsmodul (200) dazu trainiert ist, eine feinmotorische Bewegung zu erkennen.

6. Verfahren nach einem der vorherigen Ansprüche, wobei das Zuordnen des Nutzers (1) zu einer Identität eines berechtigten Nutzers (1) und das Zuordnen des Nutzers (1) zu einem emotionalen Zustand jeweils die folgenden Schritte umfassen:
• Generieren von Vergleichsparametern aus einem Vergleichsdatensatz,
• Generieren von Klassifikationsparametern (520) aus den verhaltensbasierten Daten (500),
• Vergleichen der Vergleichsparameter mit den Klassifikationsparametern (520) und
• Berechnen der Zuordnungswahrscheinlichkeit der jeweiligen Zuordnung aus einem Ergebnis des Vergleichs,
wobei die Zuordnung des Nutzers (1) zu einer Identität eines registrierten Nutzers aufgrund der Zuordnungswahrscheinlichkeit der Zuordnung des Nutzers (1) zu einer Identität eines registrierten Nutzers erfolgt,
wobei die Zuordnung des Nutzers (1) zu einem emotionalen Zustand aufgrund der Zuordnungswahrscheinlichkeit der Zuordnung des Nutzers (1) zu einem emotionalen Zustand erfolgt.

7. Verfahren nach einem der vorherigen Ansprüche, wobei das erste Kommunikationssystem (100) Anwendungen umfasst, wobei die verhaltensbasierten Daten (500) ferner Anwendungsdaten des Nutzers (1) umfassen.

8. Verfahren nach Anspruch 7, wobei aus den Anwendungsdaten Anpassungsparameter bestimmt werden, welche externe Einflussfaktoren der biometrischen Daten beschreiben, wobei die Anpassungsparameter bei der Generierung des zweiten Zwischenergebnisses zur Anpassung der Zuordnung des Nutzers (1) zu einem emotionalen Zustand an die Einflussfaktoren verwendet werden.

9. Verfahren nach einem der vorherigen Ansprüche, wobei dem Nutzer mittels eines Signals signalisiert wird, falls die Authentifizierung erfolgreich war.

10. Verfahren nach Anspruch 9, wobei das Signal das Ergebnis der Zuordnung des Nutzers (1) zu einer Identität eines registrierten Nutzers und/oder das Ergebnis der Zuordnung des Nutzers (1) zu einem emotionalen Zustand umfasst.

11. Verfahren nach einem der vorherigen Ansprüche, wobei das Verfahren ferner ein Trainieren des Klassifikationsmoduls (200) umfasst, sofern die Authentifizierung erfolgreich war,
wobei das Trainieren des Klassifikationsmoduls (200) ein Hinzufügen der verhaltensbasierten Daten (500) zu dem Vergleichsdatensatz und ein Entfernen von verhaltensbasierten Daten (500), welche älter als ein Schwellenalter sind, umfasst.

12. Verfahren nach einem der vorherigen Ansprüche, wobei auf dem Kommunikationssystem mehrere Nutzer registriert sind und ein Klassifikationsergebnis (600) für jeden Nutzer generiert wird, wobei das Klassifikationsmodul (200) dazu konfiguriert ist einen Nutzer als einen der registrierten Nutzer zu identifizieren, wobei das Klassifikationsmodul (200) von dem Prozessor (130) des ersten Kommunikationssystems (100) ausgeführt wird,
wobei das Klassifikationsmodul (200) konfiguriert ist einen Nutzerwechsel anhand der verhaltensbasierten Daten (500) zu erkennen,
wobei das Klassifikationsmodul (200) auf ein Erkennen einer grob- und/oder feinmotorischen Bewegung des Ab- und/oder Anlegens des ersten Kommunikationssystems (100) konfiguriert und auf ein Erkennen von nutzerspezifischen Bewegungsmustern in den verhaltensbasierten Daten (500) trainiert ist.

13. Kommunikationssystem zur Authentifizierung eines Nutzers (1) eines ersten Kommunikationssystems (100), wobei das erste Kommunikationssystem (100) ein mobiles, tragbares Kommunikationssystem umfasst, welches mindestens einen Sensor zur Erfassung von verhaltensbasierten Daten (500) des Nutzers (1), ein Klassifikationsmodul (200) und einen Prozessor (130) aufweist,
wobei das Klassifikationsmodul (200) für ein Klassifizieren der verhaltensbasierten Daten (500) konfiguriert ist, wobei das Klassifizieren ein Zuordnen der verhaltensbasierten Daten (500) zu einer Identität eines registrierten Nutzers umfasst,
wobei die verhaltensbasierten Daten des Nutzers (1) biometrische Daten einer grobmotorischen Bewegung umfassen und das Klassifikationsmodul (200) dazu trainiert ist, eine grobmotorische Bewegung zu erkennen, wobei der Sensor einen Bewegungssensor zur Erfassung von Bewegungen des ersten Kommunikationssystems (100) umfasst, welcher dazu konfiguriert ist, die Daten der grobmotorischen Bewegung des Nutzers (1) des ersten Kommunikationssystems (100) zu erfassen,
wobei das Klassifizieren ferner ein Zuordnen der verhaltensbasierten Daten (500) zu einem emotionalen Zustand aus einer Mehrzahl von emotionalen Zuständen umfasst,
wobei die Mehrzahl von emotionalen Zuständen eine Auswahl von für die Authentifizierung zulässiger emotionaler Zustände umfasst,
wobei das Klassifikationsmodul (200) durch den Prozessor (130) des ersten Kommunikationssystems (100) ausgeführt wird,
wobei das System die folgenden Schritte ausführt:
• Empfangen einer Authentifizierungsanfrage,
• Erfassen der verhaltensbasierten Daten (500) durch den mindestens einen Sensor,
• Eingeben der verhaltensbasierten Daten (500) in das Klassifikationsmodul (200) und Generieren eines ersten Zwischenergebnisses und eines zweiten Zwischenergebnisses aus den verhaltensbasierten Daten (500) durch das Klassifikationsmodul (200),
• Generieren eines Klassifikationsergebnisses (600) unter Verwendung des ersten Zwischenergebnisses und des zweiten Zwischenergebnisses,
• Authentifizieren des Nutzers (1) unter Verwendung des Klassifikationsergebnisses (600),
• Generieren eines Authentifizierungssignals, wobei das Signal eine Information über das Ergebnis der Authentifizierung umfasst,
wobei das erste Zwischenergebnis eine Zuordnung des Nutzers (1) zu einer Identität eines registrierten Nutzers und die Angabe einer Zuordnungswahrscheinlichkeit umfasst, mit der dem Nutzer die Identität des registrierten Nutzers zugeordnet wird,
wobei das zweite Zwischenergebnis eine Zuordnung des Nutzers (1) zu einem emotionalen Zustand und die Angabe einer Zuordnungswahrscheinlichkeit umfasst, mit der dem Nutzer der emotionale Zustand zugeordnet wird,
wobei die Authentifizierung erfolgreich ist, wenn der Nutzer als ein berechtigter Nutzer identifiziert wird und dem Nutzer ein zulässiger emotionaler Zustand aus der Auswahl von zulässigen emotionalen Zuständen zugeordnet wird.

14. Kommunikationssystem nach Anspruch 13, wobei das erste Kommunikationssystem (100) ein Programm umfasst, wobei das Programm die Authentifizierungsanfrage sendet, um den Nutzer gegenüber dem ersten Kommunikationssystem (100) zu authentifizieren, wobei das erste Kommunikationssystem (100) dem Nutzer den Zugriff auf das Programm in Abhängigkeit von dem Authentifizierungssignal ermöglicht.

15. Kommunikationssystem nach Anspruch 13, wobei das erste Kommunikationssystem (100) mit einem zweiten Kommunikationssystem (156) kommunikativ verbunden ist, wobei das zweite Kommunikationssystem (156) die Authentifizierungsanfrage sendet, um den Nutzer gegenüber dem zweiten Kommunikationssystem (156) zu authentifizieren.

16. Kommunikationssystem nach Anspruch 15, wobei das erste Zwischenergebnis und das zweite Zwischenergebnis an das zweite Kommunikationssystem (156) gesendet werden, wobei das zweite Kommunikationssystem (156) verhaltensbasierten Daten (500) des Nutzers (1) erfasst und aus den durch das zweite Kommunikationssystem (156) erfassten verhaltensbasierten Daten (500) ein drittes Zwischenergebnis generiert, wobei das zweite Kommunikationssystem (156) das Klassifikationsergebnis (600)generiert, wobei für die Generierung des Klassifikationsergebnisses (600) ferner das dritte Zwischenergebnis verwendet wird.

## Claims

1. A method for authenticating a user (1) of a first communication system (100), the first communication system (100) comprising a mobile, portable communication system which has at least one sensor for detecting behaviour-based data (500) of the user (1), a classification module (200), and a processor (130),
the classification module (200) being configured to classify the behaviour-based data (500), and the classification comprising an assignment of the behaviour-based data (500) to an identity of a registered user,
the behaviour-based data of the user (1) comprising biometric data of a gross motor movement and the classification module (200) being trained to identify a gross motor movement, the sensor comprising a motion sensor for detecting movements of the first communication system (100), which motion sensor is configured to detect the data of the gross motor movement of the user (1) of the first communication system (100),
the classification also comprising an assignment of the behaviour-based data (500) to an emotional state from a plurality of emotional states,
the plurality of emotional states comprising a selection of emotional states admissible for the authentication,
the classification module (200) being executed by the processor (130) of the first communication system (100),
wherein the method comprises the following steps:
• receiving an authentication request,
• detecting the data (500) by means of the at least one sensor,
• inputting the behaviour-based data (500) into the classification module (200) and generating a first intermediate result and a second intermediate result from the behaviour-based data (500) by means of the classification module (200),
• generating a classification result (600) with use of the first intermediate result and the second intermediate result,
• authenticating the user (1) with use of the classification result (600),
• generating an authentication signal, wherein the signal comprises information regarding the result of the authentication,
the first intermediate result comprising an assignment of the user (1) to an identity of a registered user and the specification of an assignment likelihood with which the identity of the registered user is assigned to the user, the second intermediate result comprising an assignment of the user (1) to an emotional state and the specification of an assignment likelihood with which the emotional state is assigned to the user,
the authentication being successful if the user is identified as an authorised user and an admissible emotional state from the selection of admissible emotional states is assigned to the user.

2. The method according to claim 1, wherein the first communication system (100) comprises a program, and the program sends the authentication request in order to authenticate the user to the first communication system (100), the first communication system (100) enabling the user to access the program depending on the authentication signal.

3. The method according to claim 1, wherein the first communication system (100) is communicatively connected to a second communication system (156), and the second communication system (156) sends the authentication request in order to authenticate the user to the second communication system (156).

4. The method according to claim 3, wherein the first intermediate result and the second intermediate result are sent to the second communication system (156), with the second communication system (156) detecting behaviour-based data (500) of the user (1) and generating a third intermediate result from the behaviour-based data (500) detected by the second communication system (156), the second communication system (156) generating the classification result (600), with the third intermediate result also being used for the generation of the classification result (600).

5. The method according to any one of the preceding claims, wherein the plurality of emotional states is defined by parameter ranges which have been calculated from behaviour-based data (500) of a user group,
and/or
wherein the biometric data also comprise data regarding a fine motor movement,
the classification module (200) being trained to identify a fine motor movement.

6. The method according to any one of the preceding claims, wherein the assignment of the user (1) to an identity of an authorised user (1) and the assignment of the user (1) to an emotional state each comprise the following steps:
• generating comparison parameters from a comparison data set,
• generating classification parameters (520) from the behaviour-based data (500),
• comparing the comparison parameters with the classification parameters (520), and
• calculating the assignment likelihood of the particular assignment on the basis of a result of the comparison,
the user (1) being assigned to an identity of a registered user on the basis of the assignment likelihood of the assignment of the user (1) to an identity of a registered user,
the user (1) being assigned to an emotional state on the basis of the assignment likelihood of the assignment of the user (1) to an emotional state.

7. The method according to any one of the preceding claims, wherein the first communication system (100) comprises applications, and the behaviour-based data (500) also comprise application data of the user (1).

8. The method according to claim 7, wherein adjustment parameters are determined from the application data and describe external influencing factors of the biometric data, the adjustment parameters being used at the time of generation of the second intermediate result in order to adjust the assignment of the user (1) to an emotional state in accordance with the influencing factors.

9. The method according to any one of the preceding claims, wherein a signal signals to the user if the authentication has been successful.

10. The method according to claim 9, wherein the signal comprises the result of the assignment of the user (1) to an identity of a registered user and/or the result of the assignment of the user (1) to an emotional state.

11. The method according to any one of the preceding claims, wherein the method also comprises a training of the classification module (200) if the authentication has been successful,
the training of the classification module (200) comprising an addition of the behaviour-based data (500) to the comparison data set and a removal of behaviour-based data (500) which are older than a threshold age.

12. The method according to any one of the preceding claims, wherein a plurality of users are registered on the communication system and a classification result (600) is generated for each user, the classification module (200) being configured to identify a user as one of the registered users, and the classification module (200) being executed by the processor (130) of the first communication system (100),
the classification module (200) being configured to identify a user change on the basis of the behaviour-based data (500),
the classification module (200) being configured to identify a gross and/or fine motor movement of the putting down and/or picking up of the first communication system (100) and being trained to identify user-specific movement patterns in the behaviour-based data (500).

13. A communication system for authenticating a user (1) of a first communication system (100), the first communication system (100) comprising a mobile, portable communication system which has at least one sensor for detecting behaviour-based data (500) of the user (1), a classification module (200), and a processor (130),
the classification module (200) being configured to classify the behaviour-based data (500), the classification comprising an assignment of the behaviour-based data (500) to an identity of a registered user,
the behaviour-based data of the user (1) comprising biometric data of a gross motor movement and the classification module (200) being trained to identify a gross motor movement, the sensor comprising a motion sensor for detecting movements of the first communication system (100), which motion sensor is configured to detect the data of the gross motor movement of the user (1) of the first communication system (100),
the classification also comprising an assignment of the behaviour-based data (500) to an emotional state from a plurality of emotional states,
the plurality of emotional states comprising a selection of emotional states admissible for the authentication,
the classification module (200) being executed by the processor (130) of the first communication system (100),
wherein the system comprises the following steps:
• receiving an authentication request,
• detecting the behaviour-based data (500) by means of the at least one sensor,
• inputting the behaviour-based data (500) into the classification module (200) and generating a first intermediate result and a second intermediate result from the behaviour-based data (500) by means of the classification module (200),
• generating a classification result (600) with use of the first intermediate result and the second intermediate result,
• authenticating the user (1) with use of the classification result (600),
• generating an authentication signal, the signal comprising information regarding the result of the authentication,
the first intermediate result comprising an assignment of the user (1) to an identity of a registered user and the specification of an assignment likelihood with which the identity of the registered user is assigned to the user,
the second intermediate result comprising an assignment of the user (1) to an emotional state and the specification of an assignment likelihood with which the emotional state is assigned to the user,
the authentication being successful if the user is identified as an authorised user and an admissible emotional state from the selection of admissible emotional states is assigned to the user.

14. The communication system according to claim 13, wherein the first communication system (100) comprises a program, and the program sends the authentication request in order to authenticate the user to the first communication system (100), the first communication system (100) enabling the user to access the program depending on the authentication signal.

15. The communication system according to claim 13, wherein the first communication system (100) is communicatively connected to a second communication system (156), and the second communication system (156) sends the authentication request in order to authenticate the user to the second communication system (156).

16. The communication system according to claim 15, wherein the first intermediate result and the second intermediate result are sent to the second communication system (156), with the second communication system (156) detecting behaviour-based data (500) of the user (1) and generating a third intermediate result from the behaviour-based data (500) detected by the second communication system (156), the second communication system (156) generating the classification result (600), with the third intermediate result also being used for the generation of the classification result (600) .

## Revendications

1. Procédé d'authentification d'un utilisateur (1) d'un premier système de communication (100), dans lequel le premier système de communication (100) comprend un système de communication mobile portable, lequel présente au moins un capteur permettant la détection de données (500) basées sur le comportement de l'utilisateur (1), un module de classification (200) et un processeur (130),
où le module de classification (200) est conçu pour un classement des données (500) basées sur le comportement, où le classement comprend une association des données (500) basées sur le comportement à une identité d'un utilisateur enregistré,
où les données basées sur le comportement de l'utilisateur (1) comprennent des données biométriques d'un mouvement de motricité grossière et le module de classification (200) est entraîné pour reconnaître un mouvement de motricité grossière, où le capteur comprend un capteur de mouvement pour la détection de mouvements du premier système de communication (100), lequel est conçu pour détecter les données du mouvement de motricité grossière de l'utilisateur (1) du premier système de communication (100),
où le classement comprend en outre une association des données (500) basées sur le comportement à un état émotionnel parmi une multiplicité d'états émotionnels,
où la multiplicité des états émotionnels comprend une sélection d'états émotionnels acceptables pour l'authentification,
où le module de classification (200) est exercé par le processeur (130) du premier système de communication (100), où le procédé comprend les étapes suivantes :
• la réception d'une demande d'authentification,
• la détection des données (500) par l'au moins un capteur,
• l'entrée des données (500) basées sur le comportement dans le module de classification (200) et la génération d'un premier résultat intermédiaire et d'un deuxième résultat intermédiaire à partir des données (500) basées sur le comportement par le module de classification (200),
• la génération d'un résultat de classification (600) moyennant l'emploi du premier résultat intermédiaire et du deuxième résultat intermédiaire,
• l'authentification de l'utilisateur (1) moyennant l'emploi du résultat de classification (600),
• la génération d'un signal d'authentification, où le signal comprend une information concernant le résultat de l'authentification,
où le premier résultat intermédiaire comprend une association de l'utilisateur (1) avec une identité d'un utilisateur enregistré et l'indication d'une probabilité d'association avec laquelle l'utilisateur est associé avec l'identité de l'utilisateur enregistré,
où le deuxième résultat intermédiaire comprend une association de l'utilisateur (1) avec un état émotionnel et l'indication d'une probabilité d'association, avec laquelle l'état émotionnel est associé à l'utilisateur,
où l'authentification est réussie lorsque l'utilisateur est identifié comme un utilisateur autorisé et qu'un état émotionnel acceptable dans la sélection d'états émotionnels acceptables est associé à l'utilisateur.

2. Procédé selon la revendication 1, dans lequel le premier système de communication (100) comprend un programme, où le programme envoie la demande d'authentification afin d'authentifier l'utilisateur vis-à-vis du premier système de communication (100), où le premier système de communication (100) permet à l'utilisateur l'accès au programme en fonction du signal d'authentification.

3. Procédé selon la revendication 1, dans lequel le premier système de communication (100) est relié de manière communicative avec un deuxième système de communication (156), où le deuxième système de communication (156) envoie la demande d'authentification afin d'authentifier l'utilisateur vis-à-vis du deuxième système de communication (156).

4. Procédé selon la revendication 3, dans lequel le premier résultat intermédiaire et le deuxième résultat intermédiaire sont envoyés au deuxième système de communication (156), où le deuxième système de communication (156) détecte des données (500) basées sur le comportement de l'utilisateur (1) et génère un troisième résultat intermédiaire à partir des données (500) basées sur le comportement détectées par le deuxième système de communication (156), où le deuxième système de communication (156) génère le résultat de classification (600), où le troisième résultat intermédiaire est en outre employé pour la génération du résultat de classification (600) .

5. Procédé selon l'une des revendications précédentes, dans lequel la multiplicité des états émotionnels est définie par des zones de paramètres, lesquelles ont été calculées à partir de données (500) basées sur le comportement d'une cohorte d'utilisateurs, et/ou
dans lequel les données biométriques comprennent en outre des données d'un mouvement de motricité fine,
dans lequel le module de classification (200) est entraîné pour reconnaître un mouvement de motricité fine.

6. Procédé selon l'une des revendications précédentes, dans lequel l'association de l'utilisateur (1) à une identité d'un utilisateur autorisé (1) et l'association de l'utilisateur (1) à un état émotionnel comprennent respectivement les étapes suivantes :
• la génération de paramètres de comparaison à partir d'un ensemble de données de comparaison,
• la génération de paramètres de classification (520) à partir de données (500) basées sur le comportement,
• la comparaison des paramètres de comparaison avec les paramètres de classification (520), et
• le calcul de la probabilité d'association de l'association respective à partir d'un résultat de la comparaison,
dans lequel l'association de l'utilisateur (1) à une identité d'un utilisateur enregistré a lieu en raison de la probabilité d'association de l'association de l'utilisateur (1) à une identité d'un utilisateur enregistré,
dans lequel l'association de l'utilisateur (1) à un état émotionnel a lieu en raison de la probabilité d'association de l'association de l'utilisateur (1) à un état émotionnel.

7. Procédé selon l'une des revendications précédentes, dans lequel le premier système de communication (100) comprend des applications, où les données (500) basées sur le comportement comprennent en outre des données d'application de l'utilisateur (1).

8. Procédé selon la revendication 7, dans lequel des paramètres d'ajustement sont déterminés à partir des données d'application, lesquels décrivent des facteurs d'influence externes des données biométriques, où les paramètres d'ajustement sont employés lors de la génération du deuxième résultat intermédiaire pour l'ajustement de l'association de l'utilisateur (1) aux facteurs d'influence d'un état émotionnel.

9. Procédé selon l'une des revendications précédentes, dans lequel il est signalé à l'utilisateur au moyen d'un signal lorsque l'authentification a été réussie.

10. Procédé selon la revendication 9, dans lequel le signal du résultat de l'association de l'utilisateur (1) à une identité d'un utilisateur enregistré et/ou comprend le résultat de l'association de l'utilisateur (1) à un état émotionnel.

11. Procédé selon l'une des revendications précédentes, dans lequel le procédé comprend en outre un entraînement du module de classification (200) dans la mesure où l'authentification a été réussie,
dans lequel l'entraînement du module de classification (200) comprend un ajout des données (500) basées sur le comportement à l'ensemble de données de comparaison et un retrait de données (500) basées sur le comportement, lesquelles ont un âge supérieur à un âge limite.

12. Procédé selon l'une des revendications précédentes, dans lequel plusieurs utilisateurs sont enregistrés sur le système de communication, et un résultat de classification (600) est généré pour chaque utilisateur, où le module de classification (200) est conçu pour identifier un utilisateur en tant qu'utilisateur enregistré, où le module de classification (200) est exercé par le processeur (130) du premier système de communication (100),
dans lequel le module de classification (200) est conçu pour reconnaître un changement d'utilisateur à l'aide des données (500) basées sur le comportement,
dans lequel le module de classification (200) est conçu pour une reconnaissance d'un mouvement de motricité grossière et/ou fine de la désactivation et/ou de l'activation du premier système de communication (100) et est entraîné pour une reconnaissance de modèles de mouvements spécifiques à l'utilisateur dans les données (500) basées sur le comportement.

13. Système de communication permettant l'authentification d'un utilisateur (1) d'un premier système de communication (100), où le premier système de communication (100) comprend un système de communication mobile portable, lequel présente au moins un capteur pour la détection de données (500) basées sur le comportement de l'utilisateur (1), un module de classification (200) et un processeur (130),
dans lequel le module de classification (200) est conçu pour un classement des données (500) basées sur le comportement, où le classement comprend une association des données (500) basées sur le comportement à une identité d'un utilisateur enregistré,
dans lequel les données basées sur le comportement de l'utilisateur (1) comprennent des données biométriques d'un mouvement de motricité grossière et le module de classification (200) est entraîné pour reconnaître un mouvement de motricité grossière, où le capteur comprend un capteur de mouvement pour la détection de mouvements du premier système de communication (100), lequel est conçu pour détecter les données du mouvement de motricité grossière de l'utilisateur (1) du premier système de communication (100),
où le classement comprend en outre une association des données basées sur le comportement (500) à un état émotionnel parmi une multiplicité d'états émotionnels,
où la multiplicité des états émotionnels comprend une sélection d'états émotionnels acceptables pour l'authentification,
où le module de classification (200) est exercé par le processeur (130) du premier système de communication (100),
où le système comprend les étapes suivantes :
• la réception d'une demande d'authentification,
• la détection des données (500) basées sur le comportement par l'au moins un capteur,
• l'entrée des données (500) basées sur le comportement dans le module de classification (200) et la génération d'un premier résultat intermédiaire et d'un deuxième résultat intermédiaire à partir des données (500) basées sur le comportement par le module de classification (200),
• la génération d'un résultat de classification (600) moyennant l'emploi du premier résultat intermédiaire et du deuxième résultat intermédiaire,
• l'authentification de l'utilisateur (1) moyennant l'emploi du résultat de classification (600),
• la génération d'un signal d'authentification, où le signal comprend une information concernant le résultat de l'authentification,
où le premier résultat intermédiaire comprend une association de l'utilisateur (1) avec une identité d'un utilisateur enregistré et l'indication d'une probabilité d'association avec laquelle l'utilisateur est associé avec l'identité de l'utilisateur enregistré,
où le deuxième résultat intermédiaire comprend une association de l'utilisateur (1) avec un état émotionnel et l'indication d'une probabilité d'association, avec laquelle l'état émotionnel est associé à l'utilisateur,
où l'authentification est réussie lorsque l'utilisateur est identifié comme un utilisateur autorisé et qu'un état émotionnel acceptable dans la sélection d'états émotionnels acceptables est associé à l'utilisateur.

14. Système de communication selon la revendication 13, dans lequel le premier système de communication (100) comprend un programme, où le programme envoie la demande d'authentification afin d'authentifier l'utilisateur vis-à-vis du premier système de communication (100), où le premier système de communication (100) permet à l'utilisateur l'accès au programme en fonction du signal d'authentification.

15. Système de communication selon la revendication 13, dans lequel le premier système de communication (100) est relié de manière communicative avec un deuxième système de communication (156), où le deuxième système de communication (156) envoie la demande d'authentification afin d'authentifier l'utilisateur vis-à-vis du deuxième système de communication (156).

16. Système de communication selon la revendication 15, dans lequel le premier résultat intermédiaire et le deuxième résultat intermédiaire sont envoyés au deuxième système de communication (156), où le deuxième système de communication (156) détecte des données (500) basées sur le comportement de l'utilisateur (1) et génère un troisième résultat intermédiaire à partir des données (500) basées sur le comportement détectées par le deuxième système de communication (156), où le deuxième système de communication (156) génère le résultat de classification (600), où le troisième résultat intermédiaire est en outre employé pour la génération du résultat de classification (600) .
